(19) **Europäisches Patentamt**
**European Patent Office**
**Office européen des brevets**

(11) **EP 4 763 923 A1**

(12) **EUROPEAN PATENT APPLICATION**
published in accordance with Art. 153(4) EPC

(43) Date of publication:
**24.06.2026   Bulletin 2026/26**

(21) Application number: **24854189.8**

(22) Date of filing: **09.08.2024**

(51) International Patent Classification (IPC):
**C08L 101/00** (2006.01)    **C08J 3/20** (2006.01)
**C08K 3/013** (2018.01)    **C08L 21/00** (2006.01)
**C08L 101/02** (2006.01)    **C08L 101/12** (2006.01)

(52) Cooperative Patent Classification (CPC):
**C08J 3/20; C08K 3/013; C08L 21/00; C08L 101/00;
C08L 101/02; C08L 101/12**

(86) International application number:
**PCT/JP2024/028690**

(87) International publication number:
**WO 2025/037599 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.08.2023   JP 2023132069
13.10.2023   JP 2023177773
07.08.2024   JP 2024130700**

(71) Applicant: **Canon Kabushiki Kaisha
Tokyo, 146-8501 (JP)**

(72) Inventors:
• **MAMISHIN Masato
Tokyo 146-8501 (JP)**
• **OSHIMA Yoshihito
Tokyo 146-8501 (JP)**
• **USAMI Rieko
Tokyo 146-8501 (JP)**

(74) Representative: **TBK
Bavariaring 4-6
80336 München (DE)**

(54) **RESIN COMPOSITION, METHOD FOR PRODUCING RESIN COMPOSITION, PELLETS,
MOLDED BODY, INJECTION MOLDED BODY, AND APPARATUS**

(57)    A matrix 1 containing a polar polymer as a main component, filler particles 2 containing an inorganic material as a main component, and having a particle size of 0.1 μm or more, and elastomer particles 3 having a particle size of 0.1 μm or more are included, and the filler particles 2 and the elastomer particles 3 are in contact with the matrix 1 and disperse in the matrix 1, in a certain cross-section of the resin composition, a first elastomer particle 3a and a second elastomer particle 3b of the elastomer particles 3 exist at an interval of 10 μm or less, and a first filler particle 2a of the filler particles 2 that exists closest to the first elastomer particle 3a in the cross-section is separated from the first elastomer particle 3a via the matrix 1.

EP 4 763 923 A1

# FIG.1A

<u>10</u>

2(2b)    3(3b)

1

2(2a)    3(3a)

# FIG.1B

<u>20</u>

1

2    4

## Description

Technical Field

The present invention relates to a resin composition.

Background Art

By adding a filler and an elastomer to a thermoplastic resin, it is possible to control mechanical characteristics. Patent Document 1 discloses a method of unevenly distributing a filler and an elastomer in a thermoplastic resin by performing melt kneading twice for the purpose of improving impact strength (toughness) and an elastic modulus (rigidity).

Citation List

Patent Literature

PTL 1: Japanese Patent Laid-Open No. 2020-193284

Summary of Invention

Technical Problem

The resin composition described in Patent Document 1 has room for improvement in mechanical characteristics. In view of the foregoing, an aspect of the present embodiment is directed to providing a resin composition having an excellent mechanical characteristic.

Solution to Problem

A resin composition includes a matrix containing a polar polymer as a main component, a plurality of filler particles containing an inorganic material as a main component, and having a particle size of 0.1 $\mu$m or more, and a plurality of elastomer particles having a particle size of 0.1 $\mu$m or more, wherein the plurality of filler particles and the plurality of elastomer particles are in contact with the matrix and disperse in the matrix, wherein, in a certain cross-section of the resin composition, a first elastomer particle and a second elastomer particle of the plurality of elastomer particles exist at an interval of 10 $\mu$m or less, wherein a first filler particle of the plurality of filler particles that exists closest to the first elastomer particle in the cross-section is separated from the first elastomer particle via the matrix, and wherein a second filler particle of the plurality of filler particles that exists closest to the second elastomer particle in the cross-section is separated from the second elastomer particle via the matrix.

Advantageous Effects of Invention

According to the present embodiment, it is possible to provide a resin composition having an excellent mechanical characteristic.

Brief Description of Drawings

[Fig. 1A] Fig. 1A is a schematic diagram illustrating a morphology of a resin composition.
[Fig. 1B] Fig. 1B is a schematic diagram illustrating a morphology of a resin composition.
[Fig. 2A] Fig. 2A is a schematic diagram illustrating a morphology of a resin composition.
[Fig. 2B] Fig. 2B is a schematic diagram illustrating a morphology of a resin composition.
[Fig. 2C] Fig. 2C is a schematic diagram illustrating a morphology of a resin composition.
[Fig. 3A] Fig. 3A is a schematic diagram illustrating a generation status of a crack in a molded member formed by molding a resin composition.
[Fig. 3B] Fig. 3B is a schematic diagram illustrating a generation status of a crack in a molded member formed by molding a resin composition.
[Fig. 3C] Fig. 3C is a schematic diagram illustrating a generation status of a crack in a molded member formed by molding a resin composition.

[Fig. 4] Fig. 4 is a schematic diagram illustrating a device.
[Fig. 5A] Fig. 5A is a cross-sectional scanning electron microscope (SEM) image according to Example 1.
[Fig. 5B] Fig. 5B is a cross-sectional SEM image according to Comparative Example 1.
[Fig. 6] Fig. 6 is a cross-sectional SEM image according to Example 3. Description of Embodiments

<<Resin Composition>>

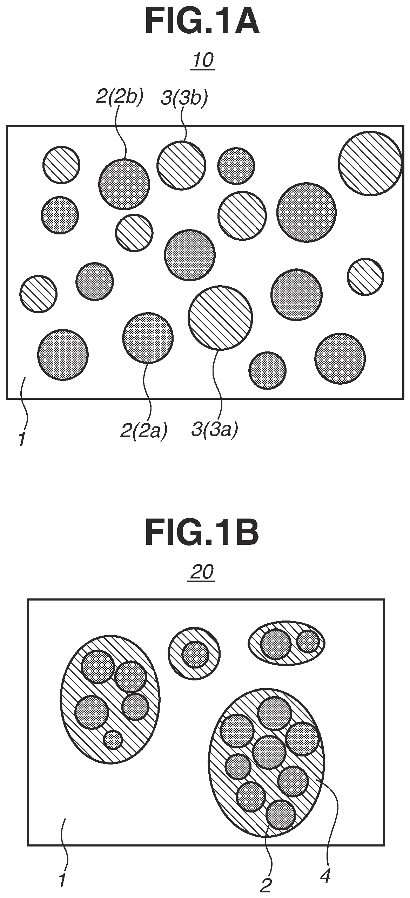

A resin composition according to the present embodiment will be described in detail. Figs. 1A and 1B are schematic diagrams illustrating the morphology of the resin composition according to the present embodiment. Fig. 1A illustrates the morphology of a resin composition 10 according to the present embodiment, and Fig. 1B illustrates the morphology of a resin composition 20 according to Comparative Example. The resin compositions 10 and 20 in Figs. 1A and 1B each include a matrix 1, filler particles 2, elastomer particles 3, and an elastomer material 4.

As illustrated in Fig. 1A, the resin composition 10 according to the present embodiment contains the matrix 1, a plurality of filler particles 2, and a plurality of elastomer particles 3.

A main component of the matrix 1 is a polar polymer. Accordingly, the matrix 1 containing a resin as a main component can be referred to as a matrix resin or a resin matrix. A main component of the plurality of filler particles 2 is an inorganic material. The filler particle 2 containing an inorganic material as a main component can be referred to as an inorganic filler particle. A main component of the plurality of elastomer particles 3 is typically an organic material, but may be an inorganic material. The elastomer particle 3 containing an organic material as a main component can be referred to as an organic elastomer particle. In the matrix 1 containing a polar polymer as a main component, a weight of the polar polymer being a main component is the largest, the weight in the matrix 1 of the polar polymer being a main component is desirably 50 wt% or more, more desirably 75 wt% or more, and further desirably 90 wt% or more. The matrix 1 containing a polar polymer as a main component may contain a secondary component aside from the main component being the polar polymer, and the secondary component need not be a polar polymer.

Because a particle size of the plurality of filler particles 2 to be observed is 0.1 $\mu$m or more, the resin composition 10 contains the plurality of filler particles 2 having a particle size of 0.1 $\mu$m or more. The resin composition 10 may contain a plurality of filler particles having a particle size smaller than 0.1 $\mu$m, or need not contain the filler particles. Because a particle size of the plurality of elastomer particles 3 to be observed is 0.1 $\mu$m or more, the resin composition 10 contains the plurality of elastomer particles 3 having a particle size of 0.1 $\mu$m or more. The resin composition 10 may contain a plurality of elastomer particles having a particle size smaller than 0.1 $\mu$m, or need not contain the elastomer particles. The particle size of the filler particles 2 or the elastomer particles 3 to be observed is 0.1 $\mu$m or more because particles having a particle size of 0.1 $\mu$m or more significantly contribute to the control of mechanical characteristics.

In a case where the filler particles 2 have a short diameter and a long diameter, the short diameter can be employed as a particle size of the filler particles 2. An aspect ratio of the filler particles 2 is defined by a ratio of the long diameter with respect to the short diameter (long diameter/short diameter). A case where an aspect ratio of the filler particles 2 is smaller than 5 can be classified into a low aspect ratio, and a case where an aspect ratio of the filler particles 2 is 5 or more can be classified into a high aspect ratio.

The plurality of filler particles 2 and the plurality of elastomer particles 3 disperse in the matrix 1. It is desirable that the plurality of filler particles 2 and the plurality of elastomer particles 3 independently disperse in the matrix 1, and this dispersion structure will be referred to as an independent dispersion structure. In the independent dispersion structure, the plurality of filler particles 2 and the plurality of elastomer particles 3 have contact with the matrix 1.

As illustrated in Fig. 1A, in the resin composition 10 according to the present embodiment, the filler particles 2 and the elastomer particles 3 have an independent dispersion structure of independently dispersing in the matrix 1. In an observation cross-section being a certain cross-section of the resin composition 10, a first elastomer particle 3a and a second elastomer particle 3b of the plurality of elastomer particles 3 exist at an interval smaller than 100 $\mu$m. That is, a distance between the first elastomer particle 3a and the second elastomer particle 3b is smaller than 100 $\mu$m. In the observation cross-section being a cross-section of the resin composition 10, the first elastomer particle 3a and the second elastomer particle 3b of the plurality of elastomer particles 3 exist at an interval of 10 $\mu$m or less. That is, a distance between the first elastomer particle 3a and the second elastomer particle 3b is 10 $\mu$m or less. Here, the first elastomer particle 3a and the second elastomer particle 3b can be selected as two elastomer particles 3 to be observed, among the plurality of elastomer particles 3. That is, a condition as two elastomer particles 3 to be observed is that a distance between the two elastomer particles is smaller than 100 $\mu$m, and furthermore 10 $\mu$m or less. In the present embodiment, the first elastomer particle 3a and the second elastomer particle 3b existing in proximity to each other in this manner have the independent dispersion structure. The second elastomer particle 3b may be an elastomer particle existing closest to the first elastomer particle 3a among the plurality of elastomer particles 3. Alternatively, another elastomer particle located at a position closer to the first elastomer particle 3a than the second elastomer particle 3b may exist. It is not essential for any elastomer particle 3 that another elastomer particle 3 exists within the range of 10 $\mu$m or less around the elastomer particle 3. In addition, observing two elastomer particles 3 existing at an interval of 100 $\mu$m or more, for example, is not so desirable for evaluation of the independent dispersion structure. Moreover, it is not appropriate to observe two elastomer particles extremely separated at an interval of 1 mm or more. The plurality of elastomer particles 3 may include two elastomer particles 3 with an interval exceeding 10 $\mu$m at positions closest to each other, but such two elastomer particles 3 need not be selected as a set of the first elastomer particle 3a and the second elastomer particle 3b to be observed to evaluate the independent dispersion structure. A distance between the first elastomer particle 3a and the second elastomer particle 3b is desirably 0.1 $\mu$m or more, and more desirably 1 $\mu$m or more. This is because the extremely-close elastomer particles 3a and 3b is not so desirable for the evaluation of dispersibility.

In the resin composition 10 having the independent dispersion structure, a first filler particle 2a of the plurality of filler particles 2 that exists closest to the first elastomer particle 3a in the observation cross-section is separated from the first elastomer particle 3a via the matrix 1. In the resin composition 10 having the independent dispersion structure, the first elastomer particle 3a is separated via the matrix 1 from the first filler particle 2a of the plurality of filler particles 2 that exists closest to the first elastomer particle 3a in the observation cross-section. That is, the first filler particle 2a does not have contact with the first elastomer particle 3a, and the matrix 1 is interposed between the first filler particle 2a and the first elastomer particle 3a. In other words, the first filler particle 2a and the first elastomer particle 3a are separated by the matrix 1.

Further, in the resin composition 10 having the independent dispersion structure, a second filler particle 2b of the plurality of filler particles 2 that exists closest to the second elastomer particle 3b in the observation cross-section is separated from the second elastomer particle 3b via the matrix 1. In the resin composition 10 having the independent dispersion structure, the second elastomer particle 3b is separated via the matrix 1 from the second filler particle 2b of the plurality of filler particles 2 that exists closest to the second elastomer particle 3b in the observation cross-section. That is, the second filler particle 2b does not have contact with the second elastomer particle 3b, and the matrix 1 is interposed between the second filler particle 2b and the second elastomer particle 3b. In other words, the second filler particle 2b and the second elastomer particle 3b are separated by the matrix 1.

On the other hand, as illustrated in Fig. 1B, in the resin composition 20 according to Comparative Example, the filler particles 2 become incorporated into the elastomer material 4, and the resin composition 20 has a core-shell structure. In the resin composition 20 having the core-shell structure, the filler particles 2 have contact with the elastomer material 4, and are not separated. Further, in the resin composition 20 having the core-shell structure illustrated in Fig. 1B, the filler particles 2 do not have contact with the matrix 1.

By employing the independent dispersion structure as illustrated in Fig. 1A, the resin composition according to the present embodiment can obtain excellent mechanical characteristics such as, for example, a flexural modulus and impact strength.

A distance between the first filler particle 2a and the second filler particle 2b can be smaller than 100 $\mu$m. A distance between the first filler particle 2a and the second filler particle 2b is desirably 10 $\mu$m or less. In the present embodiment, the first filler particle 2a and the second filler particle 2b existing in proximity to each other in this manner desirably have the independent dispersion structure.

A distance between the first filler particle 2a and the first elastomer particle 3a can be smaller than 100 $\mu$m. A distance between the first filler particle 2a and the first elastomer particle 3a is desirably 10 $\mu$m or less. A distance between the second filler particle 2b and the second elastomer particle 3b can also be smaller than 100 $\mu$m. A distance between the second filler particle 2b and the second elastomer particle 3b is also desirably 10 $\mu$m or less. In this manner, by a distance between the filler particles 2 and the elastomer particles 3 existing closest to each other, being small, it is possible to obtain excellent mechanical characteristics. A distance between the first filler particle 2a and the first elastomer particle 3a is 10 nm or more, for example, and may be 0.1 $\mu$m or more. A distance between the second filler particle 2b and the second elastomer particle 3b is 10 nm or more, for example, and may be 0.1 $\mu$m or more.

An X number % of 10 or more filler particles 2 in an area range of $10^2$ $\mu$m$^2$ or more of the observation cross-section of the resin composition 10 are separated from the plurality of elastomer particles 3 via the matrix 1. The X number % of the 10 or more filler particles 2 in the area range of $10^2$ $\mu$m$^2$ or more of the observation cross-section of the resin composition 10 exist within the phase of the matrix 1. The X (number %) is 50 number % or more being a majority, for example, desirably 70 number % or more, more desirably 80 number % or more, and further desirably 90 number % or more.

A Y number % of 10 or more elastomer particles 3 in an area range of $10^2$ $\mu$m$^2$ or more of the observation cross-section of the resin composition 10 are separated from the plurality of filler particles 2 via the matrix 1. The Y number % of 10 or more elastomer particles 3 in an area range of $10^2$ $\mu$m$^2$ or more of the observation cross-section of the resin composition 10 exist within the phase of the matrix 1. The Y (number %) is 50 number % or more being a majority, for example, desirably 70 number % or more, more desirably 80 number % or more, and further desirably 90 number % or more.

The above-described area range of $10^2$ $\mu$m$^2$ or more of the observation cross-section of the resin composition 10 desirably includes the first elastomer particle 3a, the second elastomer particle 3b, the first filler particle 2a, and the second filler particle 2b, which have been described above. An occupancy rate of the matrix 1 in the area range of $10^2$ $\mu$m$^2$ or more is desirably 30 area % or more and 90 area % or less. An occupancy rate of the plurality of filler particles 2 in the area range of $10^2$ $\mu$m$^2$ or more is desirably 1 area % or more and 50 area % or less. An occupancy rate of the plurality of elastomer particles 3 in the area range of $10^2$ $\mu m^2$ or more is desirably 1 area % or more and 50 area % or less. A lower limit of an area in the above-described area range of the observation cross-section of the resin composition 10 is $10^2$ $\mu m^2$ or more, but an upper limit is only required to be within the range in which the 10 or more filler particles 2 and the 10 or more elastomer particles 3 are included, and at the level where the calculation of the number of these particles can be performed within a reasonable time. For example, an area in the area range of the observation cross-section of the resin composition 10 is $1000^2$ $\mu m^2$ or less, desirably $500^2$ $\mu m^2$ or less, more desirably $250^2$ $\mu m^2$ or less, and further desirably $130^2$ $\mu m^2$ or less. In particular, if the filler particles 2 have a low aspect ratio, an area in the area range of the observation cross-section is more desirably $250^2$ $\mu m^2$ or less, and further desirably $130^2$ $\mu m^2$ or less. In particular, if the filler particles 2 have a high aspect ratio, an area in the area range of the observation cross-section is more desirably $130^2$ $\mu m^2$ or more, and is also desirably $250^2$ $\mu m^2$ or less. An outline of the area range of the observation cross-section of the resin composition 10 may have whichever shape of a square shape, a rectangular shape, and a circular shape. For example, the outline may have a square shape of 1000 $\mu m \times$ 1000 $\mu m$, a square shape of 100 $\mu m \times$ 100 $\mu m$, or a square shape of 10 $\mu m \times$ 10 $\mu m$, but the greatest width of the area range is 2000 $\mu m$ or less, desirably 500 $\mu m$ or less, desirably 250 $\mu m$ or less, and also desirably 200 $\mu m$ or less. The greatest width of the area range having a square shape of 100 $\mu m \times$ 100 $\mu m$ is a diagonal length, which is $(\sqrt{2}) \times$ 100 $\mu m$. Further, 30 area % or more of a region with 1 $\mu m$ from the outer rim of the filler particles 2 is desirably occupied by the matrix 1.

A composition of the matrix 1 in a volume range of $100^3$ $\mu m^3$ or more and 1 $mm^3$ or less in the resin composition 10 is desirably 30 wt% or more and 90 wt% or less. A composition of the plurality of filler particles 2 in the volume range of $100^3$ $\mu m^3$ or more and 1 $mm^3$ or less in the resin composition 10 is desirably 1 wt% or more and 50 wt% or less. A composition of the elastomer material constituting the plurality of elastomer particles 3, in the volume range of $100^3$ $\mu m^3$ or more and 1 $mm^3$ or less in the resin composition 10, is desirably 1 wt% or more and 50 wt% or less. This volume range desirably includes the first elastomer particle 3a, the second elastomer particle 3b, the first filler particle 2a, and the second filler particle 2b, which have been described above. An outline of a volume range of the resin composition 10 may have whichever shape of a cubic shape, a rectangular parallelepiped shape, and a spherical shape. For example, the outline may have a cubic shape of 100 $\mu m \times$ 100 $\mu m \times$ 100 $\mu m$ or a cubic shape of 1 mm $\times$ 1 mm $\times$ 1 mm, but the greatest width of the volume range is desirably 2 mm or less, and more desirably 1 mm or less. The greatest width of the volume range having a rectangular parallelepiped shape of 1 mm $\times$ 1 mm $\times$ 1 mm is a diagonal length, which is $(\sqrt{3}) \times$ 1 mm.

<Matrix 1>

Among thermoplastic resins, a polar polymer is used as a matrix. The polar polymer is a polymer containing a polar group such as, for example, an amide group, an imide group, a carbonyl group (ketone group), or an ester bond in its main chain. The polar polymer is a resin commonly referred to as a general-purpose engineering plastic or a super engineering plastic, and is used in applications requiring higher physical properties of heat resistance, strength, and the like, as compared with a general-purpose resins such as polyethylene and polypropylene. Further, if a mechanical physical property value can be improved, a molded product can be made thinner and light-weight. Thus, further improvement in the physical properties of the polar polymer is expected.

As specific examples of the polar polymer, examples of polymers having an amide group include polyamide, polyamide-imide, and the like. Examples of polymers having an imide group include polyimide, polyamide-imide, polyetherimide, and the like. Examples of polymers having a carbonyl group (ketone group) include polyetherketone, polyetheretherketone, and the like. Examples of polymers having an ester bond include polyarylate, polycarbonate, polyester, and the like. Examples of the polyester include polyethylene terephthalate, polybutylene terephthalate, polyethylene naphthalate, polybutylene naphthalate, and the like.

Among thermoplastic resins, a crystalline polymer is desirably used as a matrix. The crystalline polymer is advantageous as compared with a noncrystalline polymer in that hardness, elasticity, and rigidity. Among the above-described polar polymers, the crystalline polymer include polyamide, polyether ketone, polyether ether ketone, polyethylene terephthalate, polybutylene terephthalate, polyethylene naphthalate, polybutylene naphthalate, and the like. Among polyesters, polyarylate and polycarbonate are noncrystalline polymers. As the polar polymer, polyester is desirable, and polyethylene terephthalate is more desirable. Because a $CO_2$ emission caused when polyethylene terephthalate is produced is smaller than a $CO_2$ emission caused when polycarbonate is produced, the use of polyethylene terephthalate can contribute to $CO_2$ emission reduction. A crystallinity degree of a matrix or a crystalline polymer is 1 to 50%, for example, and is desirably 1 to 40%. The crystallinity degree can be controlled depending on a molding condition (temperature and pressure).

Further, the matrix may be a polar polymer cross-linked using a cross-linking agent. Examples of the cross-linking agent include compounds that undergo a cross-linking reaction due to heat, such as a carbodiimide cross-linking agent, an oxazoline cross-linking agent, an epoxy-based cross-linking agent, an isocyanate cross-linking agent, and the like. The polar polymer may be a recycled polymer obtained by collecting a used polymer with a reduced molecular weight and increasing the molecular weight by re-cross-linking the used polymer using a cross-linking agent, for example. Polyethylene terephthalate, which is produced and used in large quantities, is desirable as the used polymer and the recycled polymer.

The carbodiimide cross-linking agent in the present embodiment is a compound having at least one carbodiimide group within its molecule, and can be manufactured, for example, by heating an organic isocyanate in the presence of an appropriate catalyst to carry out a decarboxylation reaction. The carbodiimide imide group is represented by (-N=C=N-). In a resin matrix in which the carbodiimide cross-linking agent is used, a carbodiimide group derived from the carbodiimide cross-linking agent exists as part of the polymer.

Examples of the carbodiimide cross-linking agent include polycarbodiimides such as diphenylcarbodiimide, dicyclohexylcarbodiimide, di-2,6-dimethylphenylcarbodiimide, diisopropylcarbodiimide, dioctyldecylcarbodiimide, di-o-tolylcarbodiimide, di-p-tolylcarbodiimide, di-p-nitrophenylcarbodiimide, di-p-aminophenylcarbodiimide, di-p-hydroxyphenylcarbodiimide, di-p-chlorophenylcarbodiimide, di-o-chlorophenylcarbodiimide, di-3,4-dichlorophenylcarbodiimide, di-2,5-dichlorophenylcarbodiimide, p-phenylene-bis-o-tolylcarbodiimide, p-phenylene-bis-dicyclohexylcarbodiimide, p-phenylene bis-di-p-chlorophenylcarbodiimide, 2,6,2',6'-tetraisopropyl diphenylcarbodiimide, hexamethylene bis-cyclohexylcarbodiimide, ethylene bis-diphenylcarbodiimide, ethylene-bis-di-cyclohexylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-diisopropylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, N,N'-di-p-tolylcarbodiimide, N,N'-benzylcarbodiimide, N-Octadecyl-N'-phenylcarbodiimide, N-Benzyl-N'-phenylcarbodiimide, N-octadecyl-N'-tolylcarbodiimide, N-cyclohexyl-N'-tolylcarbodiimide, N-phenyl-N'-tolylcarbodiimide, N-benzyl-N'-tolylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide, N,N'-di-2,4,6-triisobutylphenylcarbodiimide, and other mono- or di-carbodiimide compounds; and poly(1,6-hexamethylene carbodiimide), poly(4,4'-methylenebiscyclohexylcarbodiimide), poly(1,3-cyclohexylenecarbodiimide), poly(1,4-cyclohexylenecarbodiimide), poly(4,4'-diphenylmethane carbodiimide), poly(3,3'-dimethyl-4,4'-diphenylmethane carbodiimide), poly(naphthylene carbodiimide), poly(p-phenylene carbodiimide), poly(m-phenylene carbodiimide), poly(tolylcarbodiimide), poly(diisopropylcarbodiimide), poly(methyl-diisopropylphenylene carbodiimide), poly(triethylphenylene carbodiimide), and poly(triisopropylphenylene carbodiimide).

The oxazoline cross-linking agent in the present embodiment is a compound having an oxazoline group within its molecule. A polymer synthesized using a monomer containing an oxazoline compound as at least one of its raw material monomers is especially desirable. The oxazoline compounds include 2-oxazoline, 3-oxazoline, and 4-oxazoline compounds, and whichever oxazoline compound may be used. In particular, the 2-oxazoline compound is highly reactive, and has also been put into industrial use. Examples of the oxazoline compound include 2-vinyl-2-oxazoline, 5-methyl-2-vinyl-2-oxazoline, 4,4-oxazoline, 4,4-dimethyl-2-vinyl-5,6-dihydro-4H-1,-oxazine, 4,4,6-trimethyl-2-vinyl-5,6-dihydro-4H-1,3-oxazine, 2-isopropenyl-2 -oxazoline, 4,4-dimethyl-2-isopropenyl-2-oxazoline, 4-acryloyloxy-methyl-2,4-dimethyl-2-oxazoline, 4-methacryloyl-oxymethyl-2,4-dimethyl-2-oxazoline, 4- methacryloyl-osimethyl-2-phenyl-4-methyl-2-oxazoline, 2-(4-vinylphenyl)-4,4-dimethyl-2-oxazoline, 4-ethyl-4-hydroxymethyl-2-isopropenyl-2-oxazoline, 4-ethyl-4-carboethoxymethyl-2-isopropenyl-2-oxazoline, and the like, but the oxazoline compound is not limited to these.

As the epoxy-based cross-linking agent according to the present embodiment, for example, a glycidyl ether compound, a glycidyl ester compound, a glycidyl amine compound, a glycidyl imide compound, an alicyclic epoxy compound, or the like can be desirably used.

Examples of the glycidyl ether compound can include butyl glycidyl ether, stearyl glycidyl ether, allyl glycidyl ether, phenyl glycidyl ether, o-phenylphenyl glycidyl ether, ethylene oxide lauryl alcohol glycidyl ether, ethylene oxide phenol glycidyl ether, ethylene glycol diglycidyl ether, polyethylene glycol diglycidyl ether, propylene glycol diglycidyl ether, polypropylene glycol diglycidyl ether, neopentyl glycol diglycidyl ether, poly(tetramethylene glycol) diglycidyl ether, cyclohexanedimethanol diglycidyl ether, glycerol triglycidyl ether, trimethylolpropane triglycidyl ether, and pentaerythritol polyglycidyl ether, bisphenol A diglycidyl ether epoxy resin, bisphenol F diglycidyl ether epoxy resin, and bisphenol S diglycidyl ether epoxy resin that are to be obtained from a condensation reaction with bisphenols such as 2,2-bis-(4-hydroxyphenyl)propane, 2,2-bis-(4-hydroxyphenyl)methane, and bis(4-hydroxyphenyl)sulfon with epichlorohydrin, and the like. Among these, bisphenol A diglycidyl ether epoxy resin is desirable.

Examples of the glycidyl ester compound can include benzoic acid glycidyl ester, p-toluic acid glycidyl ester, cyclohexanecarboxylic acid glycidyl ester, stearic acid glycidyl ester, lauric acid glycidyl ester, palmitic acid glycidyl ester, versatic acid glycidyl ester, oleic acid glycidyl ester, linoleic acid glycidyl ester, linolenic acid glycidyl ester, terephthalic acid diglycidyl ester, isophthalic acid diglycidyl ester, phthalic acid diglycidyl ester, naphthalene dicarboxylic acid diglycidyl ester, bibenzoic acid diglycidyl ester, methyl terephthalate diglycidyl ester, hexahydrophthalic acid diglycidyl ester, tetrahydrophthalic acid diglycidyl ester, cyclohexane dicarboxylic acid diglycidyl ester, adipic acid diglycidyl ester, succinic acid diglycidyl ester, sebacic acid diglycidyl ester, dodecanedioic acid diglycidyl ester, octadecanedicarboxylic acid diglycidyl ester, trimellitic acid triglycidyl ester, pyromellitic acid tetraglycidyl ester, and the like. Among these, benzoic acid glycidyl ester and versatic acid glycidyl ester are desirable.

Examples of the glycidyl amine compound can include tetraglycidylaminodiphenylmethane, triglycidyl-para-aminophenol, triglycidyl-meta-aminophenol, diglycidyl aniline, diglycidyl toluidine, tetraglycidylmetaxylene diamine, diglycidyl tribromoaniline, tetraglycidyl bisaminomethylcyclohexane, triglycidyl cyanurate, triglycidyl isocyanurate, and the like. Examples of the glycidyl imide compound can include N-glycidyl phthalimide, N-glycidyl-4-methylphthalimide, N-glycidyl-4,5-dimethylphthalimide, N-glycidyl-3-methylphthalimide, N-glycidyl-3,6-dimethylphthalimide, N-glycidyl-4-ethoxyphthalimide, N-glycidyl-4-chlorophthalimide, N-glycidyl-4,5-dichlorophthalimide, N-glycidyl-3,4,5,6- tetrabromophthalimide, N-glycidyl-4-n-butyl-5-bromophthalimide, N-glycidyl succinimide, N-glycidyl hexahydrophthalimide, N-glycidyl-1,2,3,6-tetrahydrophthalimide, N-glycidylmaleimide, N-glycidyl-$\alpha,\beta$-dimethylsuccinimide, N-glycidyl-$\alpha$-ethylsuc-cinimide, N-glycidyl-$\alpha$-propylsuccinimide, N-glycidylbenzamide, N-glycidyl p-methylbenzamide, N-glycidyl naphthamide, N-glycidyl stearamide, and the like. Among these, N-glycidyl phthalimide is desirable.

Examples of the alicyclic epoxy compound can include 3,4-epoxycyclohexylmethyl-3,4-epoxycyclohexylcarboxylate, bis(3,4-epoxycyclohexylmethyl)adipate, vinylcyclohexene diepoxide, N-methyl-4,5-epoxycyclohexane-1,2-dicarboxylic acid imide, N-ethyl-4,5-epoxycyclohexane-1,2-dicarboxylic acid imide, N-phenyl-4,5-epoxycyclohexane-1,2-dicarboxylic acid imide, N-naphthyl-4,5-epoxycyclohexane-1,2-dicarboxylic acid imide, N-trityl-3-methyl-4,5-epoxycyclohexane-1,2-dicarboxylic acid imide, and the like.

Further, as other epoxy compounds, epoxy-modified fatty acid glycerides such as epoxidized soybean oil, epoxidized linseed oil, and epoxidized whale oil, phenol-novolac epoxy resin, cresol-novolac epoxy resin, and the like can be used.

The isocyanate cross-linking agent to be used in the present embodiment is not specifically limited as long as an isocyanate group is included in its compound as a functional group, and a known polyisocyanate cross-linking agent can be used. Specifically, a generally-used water-dispersible polyisocyanate-based cross-linking agent can be used. The water-dispersible polyisocyanate-based cross-linking agent is an agent obtained by introducing a hydrophilic group into a polyisocyanate polymer, and when being added to water and agitated, can disperse in the water as fine particles.

Examples of polyisocyanate included in water-dispersible polyisocyanate can include aliphatic isocyanates such as hexamethylene diisocyanate, trimethylhexamethylene diisocyanate, tetramethylene diisocyanate, pentamethylene diisocyanate, lysine diisocyanate, and dimer acid diisocyanate; aromatic polyisocyanates such as toluene diisocyanate, xylylene diisocyanate, diphenylmethane diisocyanate, tetramethylxylylene diisocyanate, 1,5-naphthalene diisocyanate, 1,4-naphthalene diisocyanate, 4,4'-toluidine diisocyanate, 4,4'-diphenyl ether isocyanate, (m- or p-)phenylene diisocyanate, 4,4'-biphenylene diisocyanate, 3,3'-biphenylene diisocyanate, bis(4-isocyanatophenyl)sulfone, and isopropylidenebis(4-phenylisocyanate); and an alicyclic diisocyanate compounds such as hydrogenated xylylene diisocyanate, isophorone diisocyanate, 4,4'-methylenebis(cyclohexyl isocyanate), methylcyclohexane-2,4-(or-2,6-)diisocyanate, 1,3-(or 1,4-)di(isocyanatomethyl)cyclohexane, 1,4- cyclohexane diisocyanate, 1,3- cyclopentane diisocyanate, and 1,2- cyclohexane diisocyanate. As the polyisocyanate compound, a polyisocyanate compound having an isocyanurate structure, a urethane structure, a biuret structure, an allophanate structure, a uretodione structure, a trimer structure, or the like can be used. So-called blocked isocyanate in which an isocyanate group is blocked by an active hydrogen group may be used.

The matrix is desirably formed from one type of these polar polymers, or a mixture of these.

<Filler Particles 2>

The filler particles improve an elastic modulus. The shape of the filler particles is a spherical shape such as a true sphere or an oblate sphere, a polyhedron shape, an indefinite shape, a plate-like shape, a scale-like shape, a needle-like shape, a fibrous shape, or the like. The length of filler particles with a needle-like shape or a fibrous shape that has a low aspect ratio is 100 $\mu$m or less, for example, desirably 30 $\mu$m or less, and more desirably 10 $\mu$m or less.

The length of filler particles with a fibrous shape can be referred to as a fiber length. The length of filler particles with a fibrous shape that has a high aspect ratio may be 100 $\mu$m or more. The fiber length of filler particles with a fibrous shape may be smaller than 10 mm, may be 6 mm or less, may be 3 mm or less, or may be 1 mm or less. The fiber length is desirably 500 $\mu$m or less, and more desirably 300 $\mu$m or less. The particle size of filler particles with a fibrous shape can be referred to as a fiber diameter. A desirable range of the fiber diameter of filler particles with a fibrous shape may be similar to the particle diameter of filler particles. The fiber diameter of filler particles with a fibrous shape is desirably 100 $\mu$m or less, more desirably 50 $\mu$m or less, and further desirably 30 $\mu$m or less. The fiber diameter of filler particles with a fibrous shape may be 10 $\mu$m or less, but is desirably 1 $\mu$m or more, and more desirably 3 $\mu$m or more. An aspect ratio of filler particles with a fibrous shape is defined by a ratio of the fiber length with respect to the fiber diameter (fiber length/fiber diameter). An aspect ratio of filler particles with a fibrous shape is 3 or more, 5 or more, for example, or 1000 or less, for example. The aspect ratio is more desirably 300 or less, and further desirably 100 or less. The aspect ratio may be 10 or more, may be smaller than 10, may be 30 or more, or may be smaller than 30.

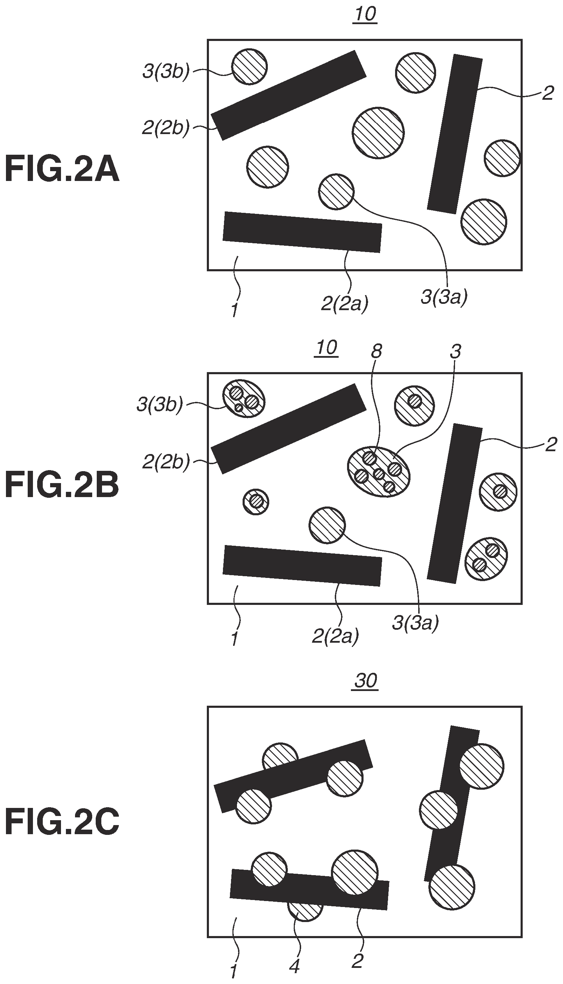

Figs. 2A and 2B illustrate a morphology of the resin composition 10 according to an embodiment in a case where the filler particles 2 with a high aspect ratio are used. Fig. 2C illustrates a morphology of a resin composition 30 according to Comparative Example in a case where the filler particles 2 with a high aspect ratio are used. The configuration illustrated in Figs. 2A and 2B has an independent dispersion structure in which the filler particles 2 are separated from the elastomer particles 3 via the matrix 1. The configuration illustrated in Fig. 2C has an attached dispersion structure in which the elastomer materials 4 adhere to the filler particles 2 with a high aspect ratio, and these integrally disperse. In the resin composition 30 having the attached dispersion structure, the filler particles 2 have contact with the elastomer materials 4, and are not separated. By the filler particles 2 with a high aspect ratio as illustrated in Figs. 2A and 2B, having the independent dispersion structure, the resin composition 10 according to an embodiment can achieve both of excellent mechanical characteristics such as a flexural modulus and impact strength, and excellent flame resistance. In addition, Fig. 2B illustrates a configuration in which additive agent particles 8 are dispersed in the elastomer particle 3, and this point will be described below

A filler particle containing an inorganic material as a main component is not specifically limited, and examples include particles of mica, glass fibers, glass beads, zinc oxide, titanium oxide (titania), zirconium oxide (zirconia), hafnium oxide (hafnia), zinc titanate, magnesium titanate, strontium titanate, calcium titanate, calcium zirconate, calcium carbonate, clays, talc, silicon oxide (silica), wollastonite, forsterite, zeolite, diatomaceous earth, silica sand, fly ash, pumice powder, slate powder, aluminum oxide (alumina), alumina white, aluminum sulfate, carbon fiber, carbon nanotube, metal fiber, barium sulfate, calcium sulfate, molybdenum disulfide, shirasu balloon, fly ash balloon, and the like. The first filler particle 2a and the second filler particle 2b desirably contain silica or calcium carbonate. The first filler particle 2a and the second filler particle 2b also desirably contain glass fibers or carbon fibers.

The filler particle may have a base member of an inorganic material being a main component of the filler particle, and a surface layer of an organic material or an inorganic material that covers the base member. The thickness of the surface layer is 100 nm or less, for example, and is desirably 10 nm or less. In the filler particle containing an inorganic material as a main component, the volume occupied by the inorganic material is greater than that occupied by an organic material, and is desirably 90 vol% or more.

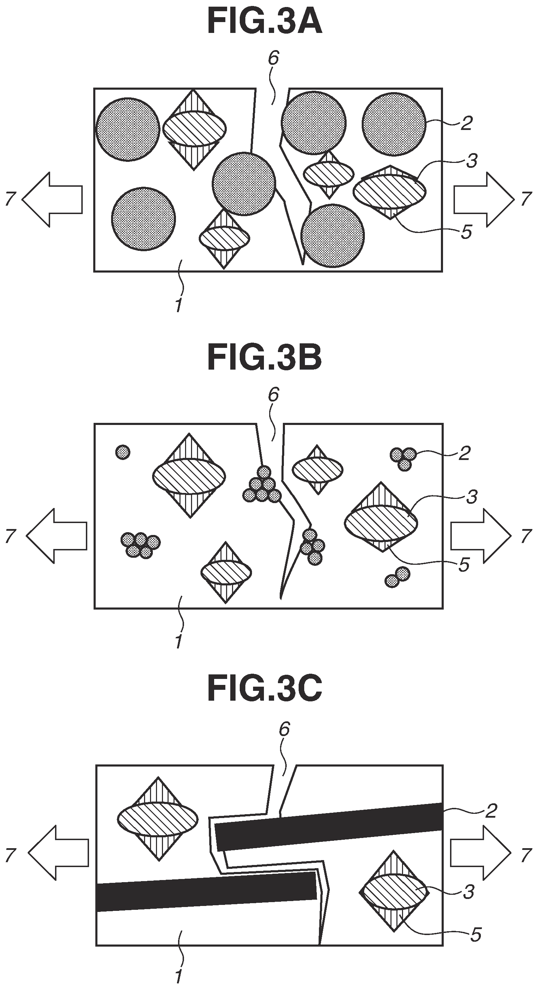

Figs. 3A to 3C are schematic diagrams illustrating a generation status of a crack in a molded member formed by molding a resin composition according to the present embodiment. As illustrated in Figs. 3A to 3C, when an impact is applied to a resin molded member in such a manner that deformation occurs in the direction of an arrow 7, the matrix 1 is oriented around the elastomer particles 3, and a craze 5 is formed, whereby the impact can be eased more efficiently. At this time, in order to avoid the occurrence of reduction in impact strength by the filler particle 2 being a material defect, the filler particles desirably have a small particle size. As illustrated in Fig. 3A, in a case where the filler particles 2 are coarse particles with a large particle size, because the filler particle 2 acts as a stress concentration point, impact strength lowers, and a crack 6 might develop. On the other hand, in a resin composition manufacturing process, to sufficiently crush and disperse particles, it is desirable to avoid a dispersion failure attributed to particle aggregation caused by a small particle size. As illustrated in Fig. 3B, in a case where the filler particles 2 are fine particles with a small particle size, in a resin composition manufacturing process, it might become difficult to disperse filler particles by particle aggregation. Consequently, a material defect attributed to particle aggregation occurs, which leads to a reduction in impact strength, and the crack 6 might develop.

For this reason, the particle size of the independently-dispersing filler particles 2 is 10 $\mu$m or less, for example, desirably 5 $\mu$m or less, and desirably 2 $\mu$m or less. If the particle size of the filler particles 2 is 10 $\mu$m or less, it is possible to favorably suppress a reduction in impact strength that is caused by the addition of the filler particles 2. Further, if the particle size is 0.2 $\mu$m or more, it is possible to favorably disperse the filler particles 2 finely in the matrix 1, and suppress a reduction in impact strength. For this reason, the particle size of the filler particles 2 is desirably 0.2 $\mu$m or more and 10 $\mu$m or less, more desirably 0.2 $\mu$m or more and 5 $\mu$m or less, and further desirably 0.2 $\mu$m or more and 2 $\mu$m or less. A filler particle with a particle size of 2 $\mu$m or more that can be included in the plurality of filler particles 2 is desirably separated via the matrix 1 from the elastomer particle 3 existing closest to the filler particle with the particle size of 2 $\mu$m or more. Accordingly, at least either of the above-described first filler particle 2a and second filler particle 2b may have a particle size of 2 $\mu$m or more. The resin composition 10 may contain the filler particle 2 with a particle size exceeding 10 $\mu$m. The particle size of the filler particle 2 with a particle size exceeding 10 $\mu$m is desirably 100 $\mu$m or less, more desirably 50 $\mu$m or less, and further desirably 30 $\mu$m or less.

In a case where an aspect ratio is 5 or more (high aspect ratio) because of the filler particle 2 having a fibrous shape or the like, as illustrated in Fig. 3C, because an area of an interfacial surface of the matrix 1 and the filler particles 2 is large, while the crack 6 develops along the interfacial surface, an impact is eased. For this reason, an aspect ratio is desirably large. For this reason, an aspect ratio of the independently dispersing filler particles 2 is desirably 5 or more, for example. If the aspect ratio of the filler particles 2 is 5 or more, it is possible to favorably suppress a reduction in impact strength that is caused by the addition of the filler particles 2. The aspect ratio of the filler particles 2 is desirably 10 or more, and desirably 15 or more. On the other hand, in the resin composition manufacturing process, to sufficiently disperse the filler particles 2, it is desirable to avoid a dispersion failure attributed to aggregation of the filler particles 2 that is caused by a high aspect ratio. In a case where the aspect ratio of the filler particles 2 is too high, in the resin composition manufacturing process, the filler particles 2 might become difficult to disperse due to the entanglement of the filler particles 2. Consequently, a material defect attributed to aggregation occurs, which leads to a reduction in impact strength, and the crack 6 might develop. If the aspect ratio of the filler particles 2 is 100 or less, it is possible to favorably disperse the filler particles 2 in the matrix 1, and suppress a reduction in impact strength. The aspect ratio of the first filler particle 2a and the second filler particle 2b may be 5 or more and 100 or less.

Examples of measurement methods of a particle size include the following methods. More specifically, a traverse cross-section sample of a molded product formed by molding a resin composition according to the present embodiment is manufactured by preprocessing such as cross-section polishing, microtoming, or ion milling. The ion milling is desirable because the high smoothness of the cross-section is provided and the loss of particles can be prevented. In a case where the temperature of the resin composition rises due to processing, cooling such as cryogenic processing may be performed. After that, observation is performed using a scanning electron microscope (SEM) under the following condition, and an SEM image of a cross-section is acquired. In addition, an observation magnification is desirably switched depending on the particle size of the filler particles. For example, in a case where the particle size is 5 $\mu$m or less, observation is desirably performed at 10,000x magnification, and in a case where the particle size exceeds 5 $\mu$m, observation is desirably performed at 1,000x magnification. From the acquired SEM image, by binarization and image analysis, a median diameter (50% particle size) of the filler particle in an arbitrary range of a molded member cross-section is set as a particle size of the filler particle. The arbitrary range of the molded member cross-section can be set to a region of a quadrangle of which lengths of neighboring two sides are a length L and a length M, for example. The length L and the length M are 5 $\mu$m or more, for example, desirably 10 $\mu$m or more, 500 $\mu$m or less, for example, and 100 $\mu$m or less, for example. The length L and the length M may be the same, or may be different, or a ratio of the length L with respect to the length M may be 0.5 to 2. In addition, in the binarization and the image analysis of the SEM image, ImageJ (can be acquired from https://imagej.nih.gov/ij/), image processing software of the U.S. National Institutes of Health (NIH), can be used. An average diameter of particles measured in such a manner as to pass through the centroid of the filler particles of the molded member cross-section can be set as a particle size of the filler particles.

Examples of measurement methods of an aspect ratio include the following methods. More specifically, as for a molded product formed by molding a resin composition according to the present embodiment, by pyrolysis treatment or solvent-based dissolution treatment, an organic component is removed, only filler particles are extracted, and an aspect ratio measurement sample is manufactured. After that, observation is performed using a scanning electron microscope (SEM) under the following condition, and an SEM image of a cross-section is acquired. In addition, an observation magnification is desirably switched depending on the length of the filler particles. For example, in a case where the length is 5 $\mu$m or less, observation is desirably performed at 10,000x magnification, and in a case where the length exceeds 5 $\mu$m, observation is desirably performed at 1,000x magnification. Furthermore, in a case where the length of the filler particles exceeds 100 $\mu$m, the SEM image is divided into a plurality of SEM images, and a scanning ion microscope (SIM) image of the entire filler particle is acquired. From the acquired SEM image, an average value of aspect ratios in an arbitrary range of the SEM image that is to be obtained by binarization and image analysis under the following condition is set as an aspect ratio of the filler particle. The arbitrary range of the molded member cross-section can be set to a region of a quadrangle of which lengths of neighboring two sides are a length L and a length M, for example. The length L and the length M are 5 $\mu$m or more, for example, desirably 10 $\mu$m or more, 500 $\mu$m or less, for example, and 100 $\mu$m or less, for example. The length L and the length M may be the same, or may be different, or a ratio of the length L with respect to the length M may be 0.5 to 2. In addition, in the binarization and the image analysis of the SEM image, ImageJ (can be acquired from https://imagej.nih.gov/ij/), image processing software of the U.S. National Institutes of Health (NIH), can be used. An average value can be calculated by setting a maximal diameter of filler particles measured in such a manner as to pass through the centroid of the filler particles of the molded member cross-section, as a filler particle length, a diameter measured from the center of the centroid in a direction orthogonal to the maximal diameter, as a filler particle diameter, and a value obtained by dividing the filler particle length by the filler particle diameter, as an aspect ratio of each filler particle.

The base member of the filler particle is desirably surface-treated by a surface treatment agent such as a coupling agent or fatty acid. Regarding the surface-treated filler particles, a commercial item surface-treated in advance may be used, or a surface treatment process may be additionally provided at the time of manufacturing of a resin composition. An amount of use of the surface treatment agent can be calculated from a specific surface area of filler particles to be treated, and the minimum coverage area of the surface treatment agent. In addition, when filler particles with a small particle size are used, because a specific surface area of the filler particle becomes large, an amount of use of the surface treatment agent inevitably increases. For this reason, an addition amount of a surface treatment agent to be used varies, and it is general to add about 0.5 wt% to 5 wt% to the filler particles. As a treatment method, a known method such as a dry treatment method such as an integral blend method, or a wet treatment method that uses surface treatment agent aqueous solution can be used. A surface layer formed by surface treatment constitutes a part of the filler particles.

Examples of the surface treatment agents include silane coupling agents such as vinyltrimethoxysilane, vinyltriethoxysilane, 3-glycidoxypropyltrimethoxysilane, 3-glycidoxypropyltriethoxysilane, 3-methacryloxypropyltrimethoxysilane, 3-methacryloxypropyltriethoxysilane, 3-acryloxypropyltrimethoxysilane, 3-aminopropyltrimethoxysilane, tris-(trimethoxysilylpropyl)isocyanurate, and 3-trimethoxysilylpropyl succinic anhydride. Further, a titanium-based or an aluminate-based coupling agent may be used. Further, fatty acids include lauric acid, stearic acid, oleic acid, and the like. Among these, a silane coupling agent is desirable. One type of these surface treatment agents may be used, or two types or more may be used in combination.

<Elastomer Particles 3, Elastomer Material>

An elastomer material included in the elastomer particles 3 improves impact strength. The elastomer material is a copolymer including a combination of a hard segment that serves as a crosslinking point, and a soft segment exhibiting rubber elasticity, and a thermoplastic elastomer having both properties of plastic and rubber is desirable.

Examples of the elastomer material include a urethane-based elastomer, an ester-based elastomer, an amide-based elastomer, an acrylic-based elastomer, an olefin-based elastomer, a styrene-based elastomer, and the like. The elastomer material is desirably an acrylic-based elastomer or an ester-based elastomer.

Examples of the urethane-based elastomer include an elastomer in which a hard segment is a polyurethane containing a urethane group, and a soft segment is a polyester containing an ester bond or a polyether containing an ether bond, and the like. In addition, the urethane group and the ester bond possess polarity.

Examples of the ester-based elastomer include an elastomer in which a hard segment is a polyester containing an ester bond, and a soft segment is a polyester containing an ester bond or a polyether containing an ether bond, and the like. In addition, the ester bond possesses polarity.

Examples of amide-based elastomer include an elastomer in which a hard segment is a polyamide containing an amido group, and a soft segment is a polyester containing an ester bond or a polyether containing an ether bond, and the like. In addition, the amido group and the ester bond possess polarity.

Examples of the acrylic-based elastomer include an elastomer in which a hard segment is a polymethylmethacrylate being a polymer of methyl methacrylate, and having an ester bond, and a soft segment is a copolymer of butyl acrylate, 2-ethylhexyl acrylate, and the like having an ester bond, and the like. The examples further include an elastomer in which a hard segment is a polyolefin of polyethylene and the like, and a soft segment is a polymethylmethacrylate being a polymer of methyl methacrylate, and having an ester bond, and the like. In addition, the ester bond possesses polarity.

Examples of the olefin-based elastomer include an elastomer in which a hard segment is a polyolefin such as polypropylene or polyethylene, and a soft segment is ethylene propylene rubber, ethylene propylene diene rubber, or the like, and the like.

Examples of the styrene-based elastomer include an elastomer in which a hard segment is a polystyrene, and a soft segment is butadiene, isoprene, ethylene, or the like, and the like.

The elastomer material desirably includes a polar group from the aspect of affinity with a matrix being a polar polymer. The polar group included in the elastomer material is, for example, a urethane group, an amido group, an ester bond, and the like. In particular, the elastomer material desirably has an ester bond in either one of a hard segment or a soft segment, or in both of these.

By the elastomer material including a polar group such as an ester bond, the elastomer material has heat resistance, and becomes able to be melt-kneaded with a polar polymer (in particular, polar polymer with high heat resistance). Further, an elastomer material having an ester bond has relatively-high mechanical physical properties, and contributes to improvement in physical properties, to which the present disclosure is directed.

By a glass-transition point (glass-transition temperature) of the elastomer material being lower than normal temperature, the elastomer material acts as an elastomer at normal temperature. The glass-transition point of the elastomer material is desirably lower than 0°C, and more desirably -20°C or less.

By melt-kneading the elastomer material in a state of being melt with a matrix being a thermoplastic resin, and finely dispersing the elastomer material in the matrix 1 as the elastomer particles 3, impact strength improves. For this reason, a melting point of the elastomer material is desirably lower than a heating temperature (molding temperature) of the resin composition in such a manner that melt kneading with the matrix is executable. The heating temperature of the resin composition is a temperature at which a matrix being a thermoplastic polymer melts, is desirably higher than a glass-transition point of the matrix, and is desirably higher than a melting point of the matrix if the matrix is a crystalline polymer. Accordingly, the melting point of the elastomer material desirably lower than the melting point of the matrix. The melting point of the elastomer material may be higher than the melting point of the matrix, but this can cause heat deterioration such as a reduction in molecular weight of the matrix that is attributed to the heating of the matrix for melting the elastomer material. In a case where the matrix is a crystalline polymer, the melting point of the elastomer material may be higher than the glass-transition point of the matrix. In a case where the matrix is a noncrystalline polymer, because the melting point of the matrix is not defined, the melting point of the elastomer material is desirably lower than the glass-transition point of the matrix.

The glass-transition point of the matrix is desirably 50°C or more to ensure strength during usage, and also desirably 200°C or less in consideration of processability. The melting point of the matrix is desirably 100°C or more in consideration of heat resistance, desirably 200°C or more, and desirably 300°C or less in consideration of processability. The melting point of the elastomer material is desirably 50°C or more to ensure strength during usage, desirably 300°C or less in consideration of processability, and desirably 200°C or less.

Because the elastomer material has rubber elasticity (i.e., flexibility), the elastomer material contributes to improvement in impact strength of the matrix. As illustrated in Figs. 3A to 3C described above, when an impact is applied to a molded member obtained by molding the resin composition according to the present embodiment, the matrix 1 is oriented around the elastomer particles 3, and the craze 5 is formed, whereby the impact can be eased more efficiently. On the other hand, because of the elastomer material having flexibility, an elastic modulus of the resin composition might decline in accordance with an addition amount of the elastomer material. For this reason, to achieve both of improvement in impact strength and elastic modulus of the matrix, it is desirable to use an elastomer material with high hardness. Regarding a rubber hardness of the elastomer material, a Shore A hardness is desirably 70 degrees or more, more desirably 80 degrees or more, and further desirably 90 degrees or more.

Further, as described above, by the craze 5 being generated around the elastomer particle 3, impact energy can be absorbed and impact strength can be absorbed. Thus, a number of elastomer particles 3 are desirably dispersed finely. For this reason, a particle size of the elastomer particles 3 is desirably 10 μm or less, and more desirably 5 μm or less. To cause the elastomer particles 3 to function mechanically efficiently, a particle size of the elastomer particles 3 is desirably 0.1 μm or more, and more desirably 0.5 μm or more. The elastomer particles 3 are typically particles to be formed by being dispersed and mixed by melt kneading to be described below, and a particle size of such elastomer particles 3 can be referred to as a dispersed particle diameter or a dispersion particle diameter.

A particle size of the elastomer particles 3 dispersed in the matrix 1 can be calculated from cross-section observation of a resin molded member using a method similar to the particle size measurement method of the filler particles 2. Specifically, similarly to the particle size measurement method of the filler particles 2, a traverse cross-section sample of a molded product is manufactured. After that, observation is performed using the SEM under a condition similar to that in the particle size measurement method of the filler particles 2, and a SEM image of a cross-section is acquired. Similarly to the particle size measurement method of the filler particles 2, from the SEM image, by binarization and image analysis, a median diameter of the elastomer particles 3 in an arbitrary area range of a molded member cross-section is set as a particle size of the elastomer particles 3. The arbitrary area range of the molded member cross-section can be set to a region of a quadrangle of which lengths of neighboring two sides are a length L and a length M, for example. The length L and the length M are 5 μm or more, for example, desirably 10 μm or more, 500 μm or less, for example, and 100 μm or less, for example. The length L and the length M may be the same, or may be different, or a ratio of the length L with respect to the length M may be 0.5 to 2.

<Composition Ratio of Components>

The matrix 1 acts as a matrix that independently disperse the filler particles 2 and the elastomer particles 3. Then, by independently dispersing the filler particles 2 and the elastomer particles 3, the resin composition 10 according to the present embodiment can obtain a mechanical characteristic exceeding the matrix 1. For this reason, a contained amount of the matrix 1 is 30 wt% or more, for example, with respect to the total amount of the resin composition, desirably 40 wt% or more, and more desirably 50 wt% or more. Further, a contained amount of the matrix 1 is 90 wt% or less, for example, with respect to the total amount of the resin composition, desirably 80 wt% or less, and more desirably 70 wt% or less. A composition ratio in the resin composition can be acquired by performing thermogravimetric analysis (TGA).

A composition ratio between the filler particles 2 and the elastomer material can be appropriately adjusted in accordance with a required mechanical physical property value without departing from a desirable composition ratio range of the matrix 1. In addition, in a case where an amount of the filler particles 2 is large, an elastic modulus can be made high, and in a case where an amount of the elastomer material is large, impact strength can be made. For this reason, a contained amount of the filler particles 2 is 1 wt% or more, for example, with respect to the total amount of a composition, desirably 5 wt% or more, and desirably 10 wt% or more. Further, a contained amount of the filler particles 2 is 50 wt% or less, for example, with respect to the total amount of a composition, desirably 40 wt% or less, and more desirably 30 wt% or less. Further, a contained amount of the elastomer material is 1 wt% or more, for example, with respect to the total amount of a composition, desirably 5 wt% or more, and desirably 10 wt% or more. A contained amount of the elastomer material is 50 wt% or less, for example, with respect to the total amount of a composition, desirably 40 wt% or less, and desirably 30 wt% or less. A contained amount of the matrix 1 is desirably larger than the contained amount of the filler particles 2 and the contained amount of the elastomer material. The contained amount of the filler particles 2 is 1/5 times or more, for example, of the contained amount of the elastomer material, 5 times or less, 1/4 times or more, and 4 times or less. The contained amount of the filler particles 2 can be one time or more of the contained amount of the elastomer material.

In the resin composition 10 according to the present embodiment, over a wide volume range of the entire resin composition 10, a structure in which the filler particles 2 and the elastomer particles 3 independently disperse in the matrix 1 desirably exists ubiquitously. In such a case, a composition ratio of the matrix, the filler particles, and the elastomer material in the entire resin composition 10, and a composition in a medium-sized volume range of $100^3$ $\mu m^3$ or more and 1 $mm^3$ or less in the resin composition 10 approximately match. Accordingly, a composition in the volume range pf $100^3$ $\mu m^3$ or more and 1 $mm^3$ or less in the resin composition 10 can be approximated by a composition ratio with respect to the total amount of the above-described resin composition. If it can be confirmed by image analysis or the like that an interpedently-dispersed structure exists ubiquitously over a wide volume range exceeding 1 $mm^3$, it is possible to perform thermogravimetric analysis (TGA) on the resin composition 10 with a wide volume range exceeding 1 $mm^3$ (for example, 10 to 100 $mm^3$). The obtained result can be employed as a composition in the volume range of $100^3$ $\mu m^3$ or more and 1 $mm^3$ or less.

In addition, a volume ratio in the medium-sized volume range of $100^3$ $\mu m^3$ or more and 1 $mm^3$ or less varies depending on the density of each component, and the following range is desirable. More specifically, a volume ratio of the matrix 1 is 35 vol% or more, for example, and 92 vol% or less, for example. Further, a volume ratio of the filler particles 2 is 2 vol% or more, for example, and 33 vol% or less, for example. Further, a volume ratio of the elastomer material is 7 vol% or more, for example, and 58 vol% or less, for example.

<ΔHSP Value>

The affinity between two components is corelated with a solubility parameter. Specifically, the affinity between two components can be controlled based on an HSP value difference between the two components (ΔHSP value) that can be calculated by a Hansen solubility parameter (HSP value). If the ΔHSP value between the two components is small, affinity between both components is high, and both components are easily drawn to each other. On the other hand, if the ΔHSP value between the two components is large, affinity between both components is low, and both components are likely to be independent.

The HSP value includes energy $\delta d$ ($MPa^{1/2}$) due to intermolecular dispersion force, energy $\delta p$($MPa^{1/2}$) due to intermolecular dipolar interaction, and energy $\delta h$($MPa^{1/2}$) due to intermolecular hydrogen bonding, and the HSP value is obtained as a sum of vectors of these three types of energy. Further, a vector difference of the HSP values between two components is regarded as ΔHSP, and the ΔHSP value can be obtained by the following Equation (1).

$$\Delta \text{HSP value} = \{4(\delta dA - \delta dB)^2 + (\delta pA - \delta pB)^2 + (\delta hA - \delta hB)^2\}^{1/2} \dots (1)$$

Many HSP values of many substances have been obtained by Hansen and his research successors, and are described in Polymer Handbook (fourth edition), VII-698-711, and written by Wesley L. Archer, Industrial Solvents Handbook. Further, HSP values can be calculated by software such as Hansen Solubility Parameter in Practice(HSPiP, Charles M. Hansen URL:http://www.hansen-solubility.com/).

ΔHSP values described in the present embodiment were calculated by entering chemical structural formulae of compounds using the database-integrated calculation software "HSPiP", 5th Edition 5.4.01, developed and sold by the Hansen Group.

To independently disperse filler particles and elastomer particles in the matrix, it is desirable to control the affinity between the surfaces of the filler particles and the elastomer material. If the ΔHSP value of both components is small, both components are easily drawn to each other, and the core-shell structure as illustrated in Fig. 1B is easily formed. On the other hand, if the ΔHSP value of both components is large, both components easily become independent in the matrix, and by forming the independent particle dispersion structure as illustrated in Fig. 1A, it becomes possible to obtain an excellent mechanical characteristic.

By the inventors of the present disclosure and the like calculating the ΔHSP value of the surface of the filler particles and the elastomer material, it has been revealed that affinity varies depending on the combination. That is, by appropriately selecting a combination of the surface of the filler particles (surface treatment agent in a case where the filler particles are surface-treated), and the elastomer material, the elastomer material granularly disperses in the matrix. It accordingly becomes possible to form an independent particle dispersion structure of the filler particles and the elastomer particles in the matrix, and becomes possible to obtain an excellent mechanical characteristic.

In order to form the independent particle dispersion structure, the ΔHSP value of the surface of the filler particles and the elastomer material is larger than 6.5 $MPa^{1/2}$, for example, desirably 7.0 $MPa^{1/2}$ or more, and more desirably 7.6 $MPa^{1/2}$ or more. The ΔHSP value of the surface of the filler particles and the elastomer material may be 15.0 $MPa^{1/2}$ or less, or may be 10.0 $MPa^{1/2}$ or less. Further, the ΔHSP value of the matrix and the elastomer material is larger than 6.0 $MPa^{1/2}$, for example, desirably 6.7 $MPa^{1/2}$ or more, and more desirably 7.0 $MPa^{1/2}$ or more. The ΔHSP value of the matrix and the elastomer material may be 15.0 $MPa^{1/2}$ or less, or may be 10.0 $MPa^{1/2}$ or less. The ΔHSP value of the matrix and the surface of the filler particles is 7.0 $MPa^{1/2}$ or more, for example, desirably 9.0 $MPa^{1/2}$ or more, and more desirably 11.0 $MPa^{1/2}$ or more. The ΔHSP value of the matrix and the surface of the filler particles may be 20.0 $MPa^{1/2}$ or less, or may be 15.0 MPa$^{1/2}$ or less.

<Other Components>

Other various additive agents may be compounded into the resin composition according to the present embodiment as necessary. The types of additive agents are not specifically limited as long as the additive agents are generally used in the compounding of thermoplastic resin or thermoplastic elastomer material. Examples of various additive agents for improving functionality include a flame retardant, wax, lubricants and release agents such as various fatty acids, fatty acid amide, fatty acid ester, and metal salt of fatty acid, various antistatic agents, a lubricity improver such as fatty acid ester, polyolefin, olefin copolymer elastomer, and polysiloxane, a degradation inhibitor such as a polymer of polyamide resin and acrylamide, an amide compound, an amino-substituted triazine compound and its derivative, urea and its derivative, a hydrazine derivative, an imidazole compound, an imide compound, and an epoxy compound, formic acid scavengers such as melamine and alkali metal hydroxides, and carbonates, and a flame retardant such as an organophosphorus-based compound. Further, as various additive agents for improving long-term stability, ultraviolet absorbers such as a benzotriazole-based compound, a benzophenone-based compound, and a phenyl salicylic acid compound, a hindered amine light stabilizer, a hindered phenol antioxidant, and the like are included. One or more types of the above-described additive agents may be used in combination.

The resin composition according to the present embodiment may contain at least one type of a metal material containing a transition metal element, a compound material containing a transition metal element, a metal material containing a typical metal element, and a compound material containing a typical metal element, which are types different from an inorganic material being a main component of the above-described first filler particle 2a.

Examples of the transition metal element include titanium (Ti), chromium (Cr), manganese (Mn), iron (Fe), cobalt (Co), nickel (Ni), copper (Cu), zirconium (Zr), niobium (Nb), molybdenum (Mo), hafnium (Hf), tantalum (Ta), tungsten (W), palladium (Pd), platinum (Pt), silver (Ag), gold (Au), and the like. Examples of the typical metal element include sodium (Na), magnesium (Mg), calcium (Ca), strontium (Sr), barium (Ba), zinc (Zn), aluminum (Al), gallium (Ga), germanium (Ge), indium (In), tin (Sn), antimony (Sb), and the like. In addition, silicon (Si) and arsenic (As) can be classified into semimetals together with germanium (Ge) and antimony (Sb), but here, silicon (Si) and arsenic (As) are treated as nonmetal elements. Metal materials are either pure metals or alloys, and examples of metal compounds being compounds containing metal elements include oxide, nitride, carbide, inorganic salt, and organic salt of metal elements. A metal compound may be a composite compound containing a plurality of transition metal elements, a plurality of typical metal elements, or a transition metal element and a typical metal element. Compounds are classified into inorganic compounds and organic compounds, and an organic compound being a metal compound, i.e., organic metal compound is a compound having a bond of carbon and a metal element. In addition, among these, an inorganic compound can also be used as an inorganic material being a main component of the first filler particle 2a. Titanium oxide (titania), zirconium oxide (zirconia), hafnium oxide (hafnia), zinc titanate, magnesium titanate, strontium titanate, calcium titanate, calcium zirconate, and the like, which have also been mentioned as inorganic materials serving as a main component of the filler particle, contain transition metal elements, and some of these are composite compounds containing transition metal elements and typical metal elements. Transition metal compounds include many high-permittivity materials having high permittivity (relative permittivity of 10 or more). By the resin composition containing such a high-permittivity material, it is possible to enhance the permittivity of the resin composition 10 containing the matrix 1 with a typically-low permittivity (relative permittivity smaller than 10), and enhance radio waves shielding performance that uses a dielectric loss. Also in a case where the resin composition 10 contains a metal material, it is possible to enhance radio waves shielding performance by the conductivity of the metal material.

The aforementioned materials containing the transition metal element and the typical metal element may serve as a main component of the second filler particle 2b, but an inorganic material being a main component of the first filler particle 2a, and an inorganic material being a main component of the second filler particle 2b are desirably the same.

The aforementioned materials containing the transition metal element and the typical metal element may be filler particles (part of the plurality of filler particles 2) that are dispersed in the matrix 1 and have a particle size of 0.1 μm or more, or may be particles with a particle size smaller than 0.1 μm. Further, the aforementioned materials containing the transition metal element and the typical metal element can be particles smaller than the elastomer particles 3, or can be particles dispersed in the elastomer particles 3. Alternatively, the aforementioned materials containing the transition metal element and the typical metal element may be dissolved in the matrix 1 or the elastomer particles 3.

Fig. 2B illustrates a configuration in which additive agent particles 8 are dispersed in the elastomer particles 3. The additive agent particles 8 and the elastomer particles 3 have a core-shell structure in which the additive agent particles 8 serve as a core, and the elastomer particles 3 serve as a shell. As long as the plurality of filler particles 2 dispersed independently of the plurality of elastomer particles 3 exist, the additive agent particles 8 need not be always dispersed independently of the elastomer particles 3. The additive agent particles 8 may adhere to the elastomer particles 3 and have contact with the elastomer particles 3. Further, the additive agent particles 8 may adhere to the filler particles 2 and have contact with the filler particles 2. The additive agent particles 8 adhering to the elastomer particles 3 may have contact with the matrix 1, or may avoid having contact with the matrix 1.

A contained amount of the aforementioned material containing the transition metal element and the typical metal element is desirably smaller than contained amounts of a polar polymer being a main component of the matrix 1, an inorganic material being a main component of the first filler particle 2a, and an elastomer material being a main component of the elastomer particles 3.

In a case where a contained amount of a specific metal element varies between the matrix 1 and the elastomer material, by acquiring a distribution image (mapping image) of the metal element, it is possible to easily make a distinction between the matrix 1 and the elastomer material in an observation image. For example, aluminum (Al), germanium (Ge), antimony (Sb), or titanium (Ti) is contained in a compound serving as a polymerization catalyst in polymerizing a polar polymer, and can be dissolved or dispersed in the matrix 1. Alternatively, the material containing the transition metal element and the typical metal element is contained in a compound serving as a pigment for coloring the resin composition, and can be dispersed in the matrix 1. Alternatively, the plurality of filler particles 2 may contain, for example, filler particles containing calcium carbonate as a main component, and filler particles containing titanium oxide as a main component, and the both components may independently disperse.

The additive agent may contain a bromine compound, a phosphorus compound, a chlorine compound, an antimony compound, a nitrogen compound, a boron compound, and the like. These compounds may be used as a flame retardant. For example, many organic acid salts containing elemental phosphorus are flame retardants, such as aluminum phosphate salt, aluminum phosphinate salt, and their derivatives. By the resin composition containing such a flame retardant, it is possible to enhance flame resistance of the resin composition. If the flame retardant is dispersed or dissolved in the elastomer particles 3, it is possible to efficiently enhance flame resistance. This is because the elastomer particles 3 are easily-burned. The additive agent particles 8 dispersed in the filler particle 3, which are illustrated in Fig. 2B, may be a flame retardant.

<Percentage of Independently Dispersed Filler Particles 2>

The percentage of the independently dispersed filler particles 2 can be calculated from the cross-section observation of a resin molded member. In a SEM image captured by the SEM, A filler particles 2 are extracted from an area range of $10^2$ $\mu m^2$ or more. The number (A) of the filler particles 2 to be extracted is only required to be 10 or more, and may be 100 or less. Among the extracted A filler particles 2, the number (B) of particles of filler particles 2 existing with being separated from the closest elastomer particle 3 via the matrix 1 is counted. From a ratio of the number (B) of particles with respect to the number (A) of the extracted filler particles 2, the percentage of independently dispersed filler particles can be obtained.

Specifically, similarly to the particle size measurement method of the filler particles 2, a traverse cross-section sample of a molded product is manufactured. After that, observation is performed using the SEM under a condition similar to that in the particle size measurement method of the filler particles 2, and an SEM image of a cross-section is acquired. From the acquired SEM image, by binarization and image analysis that are similar to those in the particle size measurement method of the filler particles 2, the A (10 or more) filler particles 2 are counted, and the number (B) of filler particles 2 separated from the closest elastomer particle 3 among the A filler particles 2 are counted. Then, using the following Equation (2), an existence percentage of the independently dispersed filler particles 2 is obtained.

A percentage X (number %) of the independently dispersed filler particles 2 = (B/A) $\times$ 100 (number %)     (2)

X (number %) is 50 number % or more being majority, for example, desirably 70 number % or more, more desirably 80 number % or more, and further desirably 90 number % or more.

<Percentage of Independently Dispersed Elastomer Particles 3>

The percentage of the independently dispersed elastomer particles 3 can be calculated from the cross-section observation of a resin molded member. In a SEM image captured by the SEM, C elastomer particles 3 are extracted from an area range of $10^2$ $\mu m^2$ or more. The number (C) of the elastomer particles 3 to be extracted is only required to be 10 or more, and may be 100 or less. Among the extracted C elastomer particles 3, the number (D) of particles of elastomer particles 3 that are separated from the closest filler particle 2 via the matrix 1 is counted. From a ratio of the number (D) of particles with respect to the number (C) of the extracted elastomer particles 3, the percentage of the independently dispersed elastomer particles 3 can be obtained.

Specifically, similarly to the particle size measurement method of the elastomer particles 3, a traverse cross-section sample of a molded product is manufactured. After that, observation is performed using the SEM under a condition similar to that in the particle size measurement method of the elastomer particles 3, and an SEM image of a cross-section is acquired. From the acquired SEM image, by binarization and image analysis that are similar to those in the particle size measurement method of the elastomer particles 3, the C (10 or more) elastomer particles 3 are counted, and the number (D) of elastomer particles 3 separated from the filler particle 2 among the C elastomer particles 3 are counted. Then, using the following Equation (3), an existence percentage of the independently dispersed elastomer particles 3 is obtained.

A percentage Y (number %) of the independently dispersed elastomer particles 3 = (D/C) × 100 (number %)     (3)

Y (number %) is 50 number % or more being majority, for example, desirably 70 number % or more, more desirably 80 number % or more, and further desirably 90 number % or more.

<Area Occupancy Rate>

In an area range of $10^2$ $\mu m^2$ or more of an observation cross-section of the resin composition 10, the matrix 1 accounts for 30 area % or more, for example, accounts for 90 area % or less, for example, and desirably accounts for 70 area % or less. Further, in this area range, the elastomer material accounts for 1 area % or more, for example, desirably accounts for 5 area % or more, accounts for 50 wt% or less, for example, and desirably accounts for 30 area % or less. Further, in this area range, the filler particles 2 accounts for 1 area % or more, for example, and desirably accounts for 5 area % or more, accounts for 50 wt% or less, for example, and desirably accounts for 30 area % or less. This area range desirably includes the first elastomer particle 3a, the second elastomer particle 3b, the first filler particle 2a, and the second filler particle 2b, which have been described above.

Occupancy rates of various materials in the area range of $10^2$ $\mu m^2$ or more of the observation cross-section of the resin composition 10 can be calculated from the cross-section observation of a molded member of the resin composition 10. Specifically, similarly to the particle size measurement method of the filler particles 2, a traverse cross-section sample of the molded product is manufactured. After that, observation is performed using the SEM under a condition similar to that in the particle size measurement method of the filler particles 2, and an SEM image of a cross-section is acquired. In the SEM image captured by the SEM, based on the shape, size, and contrast in the acquired image, the filler particles 2, the matrix 1, and the elastomer material can be identified. It is desirable to make a distinction between the filler particles 2, the matrix 1, and the elastomer material by mapping of elements contained in each material. In the element mapping, energy-dispersive X-ray spectroscopy (EDS) can be used. The SEM-EDS that uses both of the above-described SEM and element analysis is desirable. Further, the acquired image is analyzed by a compact general-purpose image processing and analysis system (Ruzex; Nireco Corporation). Based on an area ratio in a processed image obtained by performing banalization processing on the acquired image using a predetermined threshold value, occupancy rates of various materials in the area range of $10^2$ $\mu m^2$ or more are calculated. An area in the area range of the observation cross-section of the resin composition 10 is $1000^2$ $\mu m^2$ or less, for example, desirably $500^2$ $\mu m^2$ or less, more desirably $250^2$ $\mu m^2$ or less, and further desirably $130^2$ $\mu m^2$ or less.

<<Manufacturing Method of Resin Composition>>

A manufacturing method of the resin composition according to the present embodiment includes a process of melt kneading a matrix, filler particles, and an elastomer raw material containing the elastomer material constituting elastomer particles. Examples of kneading apparatuses include a twin screw extruder, a two-roll mill, and the like. Specifically, the TEM Extruder (Toshiba Machine Co., Ltd.), the TEX twin-screw kneader (The Japan Steel Works, LTD.), the PCM kneader (Ikegai Iron Works Corporation), the Nidex (Nippon Coke & Engineering Co., Ltd.), and the like are included.

<<Molded Member>>

A molded member according to the present embodiment is formed by molding the resin composition according to the present embodiment. As a molding method, extrusion molding from a mold, and injection molding into a mold are typically used. Using a pellet manufactured by extrusion molding from a mold, injection molding may be performed. A resin composition molded by injection molding can be referred to as an injection-molded member. Further, a molded member formed by injection molding may be further processed by blow molding or the like.

A Charpy impact value of the molded member is desirably 3 kJ/$m^2$ or more, and more desirably 6 kJ/$m^2$ or more. If the Charpy impact value is smaller than 3 kJ/$m^2$, a crack might be generated in a drop test or the like.

A flexural modulus of the molded member is desirably 2300 MPa or more, and more desirably 2600 MPa or more. This is because, if the flexural modulus falls within this range, deformation to be caused by expected external force remains within an elastic deformation region, and shape deformation does not occur. On the other hand, if the flexural modulus is smaller than 2300 MPa, because plastic deformation might be caused by expected external force, thickening might be demanded more than conventional.

<<Device>>

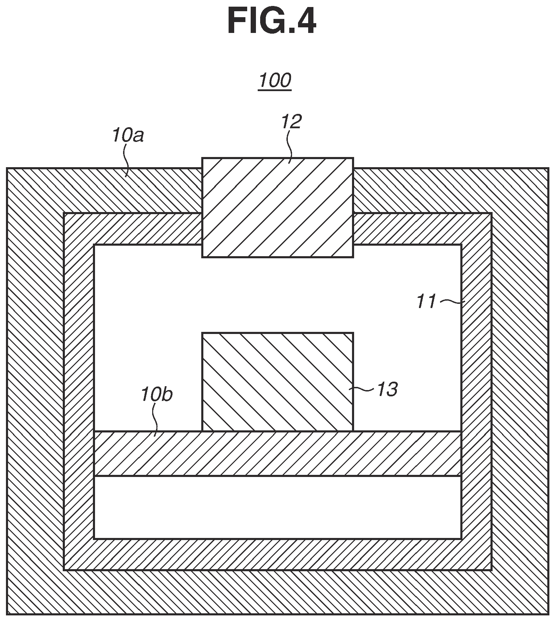

As illustrated in Fig. 4, a device 100 according to the present embodiment includes members 10a and 10b formed by molding the resin composition 10 according to the present embodiment. Examples of the device 100 include office devices such as a printer and a copier, medical devices such as computerized tomography (CT), video device such as a projector and a display, and the like. These various devices include at least any of an electric component 13, an optical component 12, and a metal component 11 aside from the members 10a and 10b formed by molding the resin composition 10 according to the present embodiment. The electric component 13, the optical component 12, or the metal component 11 implement the function of the device 100. The metal component 11 can be used also in a casing for ensuring the mechanical strength of the device 100.

The members 10a and 10b formed by molding the resin composition 10 can be used as members that ensure the mechanical strength of the device 100, and mechanically protect the device 100. The member 10a formed by molding the resin composition 10 may be an exterior member such as an external cover of the device 100. The exterior member may be fixed to a metal casing (metal component 11). The member 10a formed by molding the resin composition 10 according to the present embodiment may be an interior member such as a mechanism element of the device 100. The interior member may be fixed to a metal casing (metal component 11). The members 10a and 10b formed by molding the resin composition 10 desirably have radio waves shielding performance from the aspect of a stable operation of the device 100 and the suppression of radio waves radiation from the device 100.

Examples

<<Examples 1 to 15 and Comparative Examples 1 to 3>>

A material used in the examples (including Comparative Examples) is given below.

(A) Matrix material

[Table 1]

| | Compound | Product Name | Glass-Transition Point [°C] | Melting Point [°C] | Impact Strength [KJ/m$^2$] | Flexural modulus [MPa] |
|---|---|---|---|---|---|---|
| A-1 | Polyethylene Terephthalate | TEIJIN LIMITED "TRN-8550FF" | 71 | 252 | 3 | 2300 |
| A-2 | Polycarbonate | Mitsubishi Engineering Plastics Corporation "HL-3503" | 142 | - | 49 | 2300 |
| A-3 | Polyarylate | Unitika Ltd. "U-100" | 193 | - | 22 | 2100 |

(B) Filler particle

In addition, an average particle size [μm] of filler particles that is shown in Table 2 is a catalog value of a product.

[Table 2]

| | Compound | Product Name | Average Particle Size [μm] |
|---|---|---|---|
| B-1 | Silica Particles | Denka Company Limited. "Fused Silica SFP-20M" | 0.4 |
| B-2 | Silica Particles | Denka Company Limited. "Fused Silica FB-5D" | 4.7 |
| B-3 | Silica Particles | Denka Company Limited. "Fused Silica FB-15D" | 13.0 |
| B-4 | Calcium Carbonate Particles | NITTO FUNKA KOGYO K.K. "NITOREX #23P" | 1.0 |

(continued)

| | Compound | Product Name | Average Particle Size [μm] |
|---|---|---|---|
| B-5 | Calcium Carbonate Particles | Shiraishi Kogyo Kaisha, Ltd. "Brilliant-1500" | 0.15 |
| B-6 | Calcium Carbonate Particles | NITTO FUNKA KOGYO K.K. "NS#100" | 2.1 |

(C) Surface treatment agent

[Table 3]

| | Compound | Product Name |
|---|---|---|
| C-1 | 3-glycidoxypropyl trimethoxysilane | Tokyo Chemical Industry Co., Ltd. "G0210" |
| C-2 | Vinyl trimethoxysilane | Shin-Etsu Chemical Co., Ltd. "KBM-1003" |
| C-3 | 3-methacryloxypropyl trimethoxysilane | Shin-Etsu Chemical Co., Ltd. "KBM-503" |

(D) Elastomer material

[Table 4]

| | Compound | Product Name | Glass-Transition Point [°C] | Melting Point [°C] | Shore A Hardness [degrees] |
|---|---|---|---|---|---|
| D-1 | Acrylic-based elastomer (including ester bond) | Kuraray Co., Ltd. "KURARITY LA4285" | -52 | 75 | 95 |
| D-2 | Esther-based elastomer (including ester bond) | ARONKASEI CO., LTD. "Estellar EA-A80CR" | -56 | 222 | 76 |
| D-3 | Acrylic-based elastomer (including ester bond) | Sumitomo Chemical Co., Ltd. "Acryft WD106" | -39 | 107 | 100 |
| D-4 | Acrylic-based elastomer (including ester bond) | Sumitomo Chemical Co., Ltd. "Bond First BF-E" | -43 | 103 | 92 |
| D-5 | Acrylic-based elastomer (including ester bond) | Kuraray Co., Ltd. "KURARITY LA2250" | -54 | 70 | 65 |
| D-6 | Styrene-based elastomer | Asahi Kasei Corporation "Taftec H1041" | -63 | 45 | 84 |
| D-7 | Olefin-based elastomer | Mitsui Chemicals, Inc. "TAFMER DF640" | -65 | 49 | 56 |
| D-8 | Olefin-based elastomer | Mitsui Chemicals, Inc. "TAFMER MA8510" | -61 | 72 | 86 |
| D-9 | Styrene-based elastomer | Asahi Kasei Corporation "Taftec M1913" | -60 | 47 | 84 |

(continued)

|  | Compound | Product Name | Glass-Transition Point [°C] | Melting Point [°C] | Shore A Hardness [degrees] |
|---|---|---|---|---|---|
| D-10 | Styrene-based elastomer | Asahi Kasei Corporation "Taftec M1943" | -62 | 46 | 67 |

<Pellet Manufacturing of Resin Composition>

Matrix materials shown in Tables 5 and 6 were dried in advance to have a water amount of 100 ppm. This is to suppress hydrolysis in kneading, and conditions of temperature and time vary depending on the resin type. In addition, water amounts were measured using a moisture analyzer for polymers "AquaTrack V (Product Name) by ITS Japan Co., Ltd.".

Subsequently, surface treatment of filler particles shown in Tables 5 and 6 is performed. The filler particles were input into a mixer "SMV-20Ba (Product Name) manufactured by KAWATA MFG. CO., LTD.", and the dripping of a surface treatment agent shown in Tables 5 and 6 was performed from above while agitating the filler particles. An addition amount of the surface treatment agent was calculated using the following model Equation (4) from a specific surface area of the filler particle (B) and the minimum coverage area of the surface treatment agent. In addition, as the minimum coverage area, a manufacturer's catalog and literature values were referred to.

$$\text{Addition amount (g) of surface treatment agent} = \text{filler particle weight (g)} \times \text{specific surface area of filler particle} (m^2/g)/\text{minimum coverage area (g) of surface treatment agent} \qquad (4)$$

After that, matrix materials, filler particles, and elastomer materials were added to produce a blended product of raw materials in such a manner that the weight percentage of each component in the final resin composition corresponds to the compounded amounts shown in Tables 5 and 6. In a case where surface treatment of the filler particles was performed, the weight percentage of the filler particles includes the surface treatment agent.

In Examples 1 to 10 and Comparative Examples 1 to 3, a matrix material A-1, filler particles B-1 to B-6, and elastomer materials D-1 to D-10 were supplied in such a manner that a predetermined weight percentage is to be obtained in a weight feeder. In addition, before the supply, using surface treatment agents C-1 to C-2, treatment was performed on the filler particles B-1 to B-6 by the above-described surface treatment method.

In Examples 11 to 15, matrix materials A-2 to A-3, filler particles B-2 to B-6, and elastomer materials D-1 to D-3 and D-6 were supplied in such a manner that a predetermined weight percentage is to be obtained in a weight feeder. In addition, before the supply, using surface treatment agents C-2 to C-3, treatment was performed on the filler particles B-2 to B-6 by the above-described surface treatment method.

The blended product was melt kneaded by a twin screw extruder "PCM30 (product name) manufactured by Ikegai Iron Works Corporation" under a condition of a cylinder temperature of 260°C and a screw revolution speed of 250 rpm, to produce a strand, and by performing cutting processing using a pelletizer, a pellet of the resin composition was obtained.

<Molding of Resin Molded Product>

The obtained pellet of the resin composition was dried in advance to obtain a water amount of 100 ppm. In addition, the water amount was measured using a method similar to the measurement method of the water amount of the matrix material. After that, injection molding was performed by an injection molding machine "SE-180D (product name) manufactured by Sumitomo Heavy Industries, Ltd." at a cylinder temperature of 280°C and a mold temperature of 30°C, and a strip-shaped test piece type B1 (length 80 mm $\times$ width 10 mm $\times$ thickness 4 mm) defined by the JIS K7152-1 was molded.

<Charpy Impact Value>

The molded strip-shaped test piece was notched (shape A) using a notching machine "No. 189-PN (product name) manufactured by YASUDA SEIKI SEISAKUSHO, LTD." in compliance with JIS K7111, and a 2-mm deep notch with a radius of 0.25 mm at the notch tip and an angle of 45°was made at the central portion. The test piece was destroyed by energy of 1 J from the back surface of the notch of the test piece in compliance with JIS K7111-1 using a Charpy impact test machine "No. 258 (product name) manufactured by YASUDA SEIKI SEISAKUSHO, LTD.". The energy required for destruction was calculated from an angle at which a hammer, swung up to 150°, swings back after destroying the test piece, and an average value of measurement values of five test pieces was regarded as a Charpy impact value.

The measurement results of the Charpy impact test were evaluated based on the following indices. These results are shown in Tables 5 and 6. A higher Charpy impact strength can be evaluated as good.

A: Charpy impact strength was 6 kJ/m$^2$ or more.
B: Charpy impact strength was 3 kJ/m$^2$ or more and smaller than 6 kJ/m$^2$.
C: Charpy impact strength was smaller than 3 kJ/m$^2$.

<Flexural Modulus>

The molded strip-shaped test piece was measured in compliance with JIS K7171 with a span of 64 mm and at the indenter descending speed of 2 mm/minute by installing a three-point bending jig on a universal material testing machine "5581 (product name) manufactured by Instron Corporation", and a flexural modulus was calculated from stress gradient of a defined strain range (0.05% to 0.25%). An average value of measurement values of five test pieces was regarded as a flexural modulus.

Further, flexural moduli were evaluated based on the following standards. Results are shown in Table 5. A higher flexural modulus can be evaluated as good.

A: A flexural modulus was 2,600 MPa or more.
B: A flexural modulus was 2,300 MPa or more and smaller than 2,600 MPa.
C: A flexural modulus was smaller than 2,300 MPa.

<ΔHSP Value>

The ΔHSP value was calculated by entering chemical structural formulae of compounds using the database-integrated calculation software "HSPiP", 5th Edition 5.4.01, developed and sold by the Hansen Group. In Tables 5 and 6, the ΔHSP value of the surface of the filler particles and the elastomer material is shown as "ΔHSP value 1", the ΔHSP value of the matrix material and the elastomer material is shown as "ΔHSP value 2", and the ΔHSP value of the matrix material and the surface of the filler particles is shown as "ΔHSP value 3".

<Check of Dispersion Structure>

The observation of the central portion of the molded strip-shaped test piece is performed in a cross-section direction, and a dispersion structure of the filler particles and the elastomer particles in the matrix is checked. In the observation cross-section, a cross-section to be observed was prepared by performing polishing in order using abrasive paper with a granularity of #400 to #2500, and then performing buffing using diamond slurry with a particle size of 0.5 μm. The dispersion structure was observed at 10,000x magnification under a condition of an acceleration voltage of 3 kV using a scanning electron microscope "JSM-F100 (product name) manufactured by JEOL Ltd.

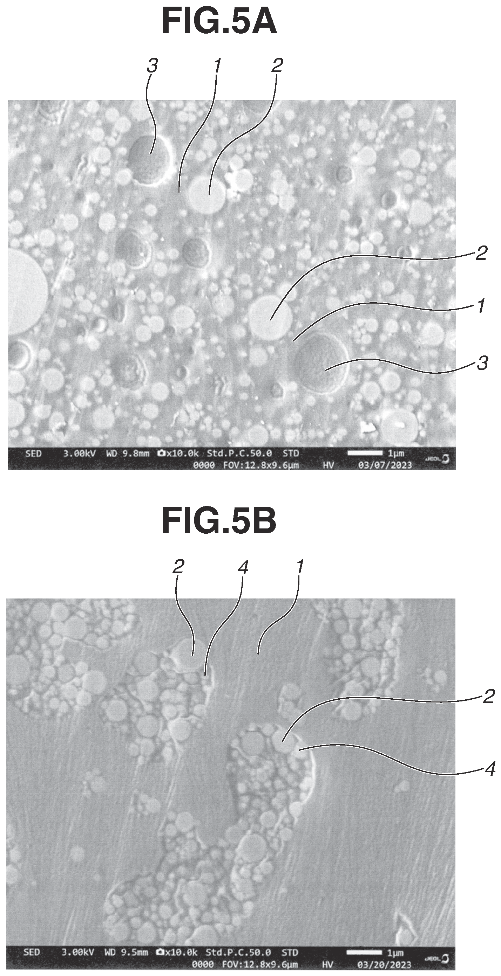

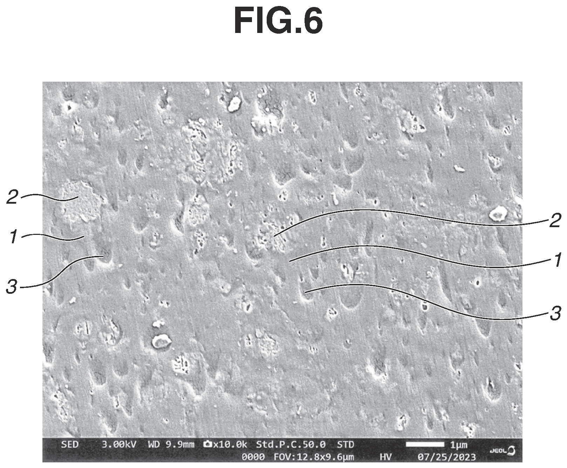

Tables 5 and 6 show observation results assuming that the state illustrated in Fig. 1A is "Independent Dispersion" and the state illustrated in Fig. 1B is "Core-shell". Further, Fig. 5A illustrates a cross-sectional SEM image according to Example 1, and Fig. 5B illustrates a cross-sectional SEM image according to Comparative Example 1. Fig. 6 illustrates a cross-sectional SEM image according to Example 3.

<Percentage of Independently Dispersed Filler Particles>

Similarly to the check of a dispersion structure, a cross-section to be observed was prepared. After that, observation is performed using a scanning electron microscope (SEM) under the following condition, and a SEM image of the cross-section is acquired. In addition, an observation magnification was switched depending on the particle size of the filler particles. In a case where the particle size is 5 μm or less, observation was performed at 10,000x magnification, and in a case where the particle size exceeds 5 μm, observation was performed at 1,000x magnification. A viewing field area of the SEM image is set to 10$^2$ μm$^2$ or more and 130$^2$ μm$^2$ or less. From the acquired SEM image, by binarization and image analysis under the following condition, the number (A)(10 or more) of all filler particles was counted, and the number (B) of filler particles separated from the closest elastomer particle via the matrix among the A filler particles was counted. Then, using Equation (2) described above, the percentage X(number %) of the independently dispersed filler particles was obtained.

[Condition]

{Apparatus Name}
Schottky Field Emission Scanning Electron Microscope JSM-F100 (manufactured by JEOL Ltd.)
{Acceleration Voltage}
3 kV
{Magnification}
10,000x or 1,000x
{Measurement Range}
12.8 $\mu$m $\times$ 9.6 $\mu$m (10,000x) or 128 $\mu$m $\times$ 96 $\mu$m (1,000x)
{Number of Evaluated Areas}
10 areas/sample
{Binarization and Image Analysis}
ImageJ
{Binarization Method}
MaxEntropy (A threshold value is appropriately modified in such a manner that only filler particles can be separated by binarization. In a case where binarization cannot be executed by image processing software, an image in which only filler particles are filled by visual check using painting software or the like is additionally prepared).

Tables 5 and 6 show results of Examples 1 to 15 and Comparative Examples 1 to 3.

[Table 5]

| | | | Example | | | | | | | | | | Comparative Example | | |
|---|---|---|---|---|---|---|---|---|---|---|---|---|---|---|---|
| | No. | | 1 | 2 | 3 | 4 | 5 | 6 | 7 | 8 | 9 | 10 | 1 | 2 | 3 |
| Composition | Matrix Material | | A-1 | A-1 | A-1 | A-1 | A-1 | A-1 | A-1 | A-1 | A-1 | A-1 | A-1 | A-1 | A-1 |
| | Filler Particles | | B-1 | B-1 | B-4 | B-6 | B-2 | B-1 | B-1 | B-1 | B-3 | B-5 | B-4 | B-1 | B-6 |
| | Surface Treatment Agent | | C-1 | C-1 | C-2 | C-1 | C-2 | C-1 | C-1 | C-1 | C-1 | C-1 | C-1 | C-1 | C-1 |
| | Elastomer Material | | D-1 | D-1 | D-3 | D-3 | D-4 | D-5 | D-7 | D-2 | D-1 | D-6 | D-9 | D-8 | D-10 |
| Composition Ratio | Matrix Material | wt% | 55 | 40 | 50 | 40 | 70 | 55 | 60 | 60 | 65 | 65 | 55 | 50 | 55 |
| | Filler Particles | wt% | 30 | 30 | 30 | 20 | 5 | 30 | 20 | 20 | 20 | 20 | 30 | 30 | 30 |
| | Elastomer Material | wt% | 15 | 30 | 20 | 40 | 25 | 15 | 20 | 20 | 15 | 15 | 15 | 20 | 15 |
| ΔHSP Value | ΔHSP Value 1 Filler/Elastomer | $MPa^{1/2}$ | 7.6 | 7.6 | 7.0 | 9.1 | 8.2 | 7.6 | 10.0 | 9.4 | 7.6 | 10.5 | 6.3 | 3.5 | 6.3 |
| | ΔHSP Value 2 Matrix/Elastomer | $MPa^{1/2}$ | 7.1 | 7.1 | 8.2 | 8.2 | 6.7 | 7.1 | 9.5 | 2.9 | 7.1 | 6.7 | 5.4 | 7.8 | 5.4 |
| | ΔHSP Value 3 Matrix/Filler | $MPa^{1/2}$ | 11.1 | 11.1 | 14.5 | 11.1 | 14.5 | 11.1 | 11.1 | 11.1 | 11.1 | 11.1 | 11.1 | 11.1 | 11.1 |
| Characteristic | Dispersion Structure | — | Independent dispersion | Independent dispersion | Independent dispersion | Independent dispersion | Independent dispersion | Independent dispersion | Independent dispersion | Independent dispersion | Independent dispersion | Independent dispersion | Core-shell | Core-shell | Core-shell |
| | Percentage of Independently Dispersed Filler Particles | Number % | 97 | 89 | 88 | 86 | 93 | 86 | 95 | 87 | 92 | 83 | 2 | 1 | 5 |
| | Filler Particles Particle Size | μm | 0.5 | 0.5 | 1.2 | 2.0 | 4.9 | 0.5 | 0.5 | 0.5 | 15.0 | 0.2 | 1.2 | 0.5 | 2.0 |
| | Elastomer Particles Particle Size | μm | 0.6 | 0.8 | 2.1 | 3.2 | 3.1 | 0.4 | 3.2 | 2.7 | 0.6 | 2.2 | — | — | — |
| | Elastomer Material Shore A Hardness | Degree | A95 | A95 | A100 | A100 | A92 | A65 | A56 | A76 | A96 | A84 | A84 | A86 | A67 |
| Physical property | Charpy Impact Value | kJ/m² | 8.1 | 10.2 | 7.5 | 7.5 | 9.4 | 9.2 | 4.5 | 6.2 | 1.8 | 2.3 | 10.2 | 14.2 | 8.8 |
| | | Rating | A | A | A | A | A | A | B | A | C | C | A | A | A |
| | Flexural Modulus | MPa | 2810 | 2600 | 2730 | 2360 | 2350 | 2430 | 2460 | 2410 | 2500 | 2350 | 1210 | 880 | 1110 |
| | | Rating | A | A | A | B | B | B | B | B | B | B | C | C | C |

[Table 6]

| | | | Example | | | | |
|---|---|---|---|---|---|---|---|
| | No. | | 11 | 12 | 13 | 14 | 15 |
| Composition | Matrix material | | A-2 | A-2 | A-3 | A-2 | A-2 |
| | Filler particles | | B-2 | B-4 | B-6 | B-5 | B-3 |
| | Surface treatment agent | | C-2 | C-3 | C-2 | C-2 | C-2 |
| | Elastomer material | | D-6 | D-2 | D-3 | D-1 | D-3 |
| Composition Ratio | Matrix Material | wt% | 75 | 70 | 80 | 60 | 70 |
| | Filler Particles | wt% | 20 | 20 | 15 | 10 | 10 |
| | Elastomer Material | wt% | 5 | 10 | 5 | 30 | 20 |
| ΔHSP Value | ΔHSP Value 1 Filler/Elastomer | $MPa^{1/2}$ | 9.2 | 8.8 | 7.0 | 8.0 | 7.0 |
| | ΔHSP Value 2 Matrix/Elastomer | $MPa^{1/2}$ | 9.1 | 6.8 | 7.2 | 6.7 | 8.4 |
| | ΔHSP Value 3 Matrix/Filler | $MPa^{1/2}$ | 11.0 | 9.0 | 13.6 | 11.0 | 11.0 |
| Characteristic | Dispersion Structure | — | Independent dispersion | Independent dispersion | Independent dispersion | Independent dispersion | Independent dispersion |
| | Percentage of Independently Dispersed Filler Particles | Number % | 93 | 92 | 86 | 90 | 84 |
| | Filler Particles Particle Size | μm | 4.9 | 1.2 | 2.0 | 0.2 | 15.0 |
| | Elastomer Particles Particle Size | μm | 1.8 | 2.4 | 1.7 | 0.7 | 2.9 |
| | Elastomer Material Shore A Hardness | Degree | A84 | A76 | A100 | A95 | A100 |
| Physical Property | Charpy Impact Value | $kJ/m^2$ | 27 | 50 | 23 | 53 | 51 |
| | | Rating | A | A | A | A | A |
| | Flexural Modulus | MPa | 2630 | 2550 | 2420 | 2470 | 2500 |
| | | Rating | A | B | B | B | B |

The particle size of filler particles and the particle size of elastomer particles in Tables 5 and 6 were measured from the SEM image of the cross-section. A difference from the catalog value shown in Table 2 falls within ±50%, and it can be determined from the SEM image of the cross-section that a measurement method is appropriate. In Examples, in the SEM image at 10,000x magnification, it was confirmed that two elastomer particles (3a, 3b) existing at an interval of 10 μm or less are separated from the filler particles. In Examples, the percentage (Y number %) of independently-dispersed elastomer particles is not much different than the percentage (X number %) of independently-dispersed filler particles, is 50 number % or more, and can be 70 number % or more. In a typical injection-molded member, a surface portion (skin layer) and a central portion (core layer) can be formed in a test piece. In Examples, because the independent dispersion structure exists ubiquitously over the wide range of the central portion (core layer) of the test piece, a ratio of the area occupancy rate of the matrix, the area occupancy rate of the filler particles, and the occupancy rate of the elastomer particles is not much different than a composition ratio.

The resin compositions according to Examples 1 to 15 have the independent dispersion structure, and exhibit excellent flexural moduli as compared with that of a single matrix that is shown in Table 1. In contrast to this, the resin compositions according to Comparative Examples 1 to 3 have the core-shell structure, and flexural moduli decline from that of a single matrix that is shown in Table 1.

In Examples 1 to 3 and 11, Charpy impact strength and flexural modulus were rated as A, which especially exhibit excellent mechanical characteristics. In Examples 1 and 2, because the elastomer material D-1 containing an ester bond being a polar group is used, as compared with Example 7 in which an elastomer material D-7 not containing an ester bond is used, Charpy impact strength is estimated to be higher. In Examples 1 and 2, because the particle size of the filler particles is 0.5 $\mu$m, which is smaller than that in Example 9, in which the particle size of the filler particles is 15.0 $\mu$m, a phenomenon as described with reference to Fig. 3A is suppressed, and Charpy impact strength is estimated to be higher as compared with that in Example 9. In Example 7, because the particle size of the filler particles is 0.5 $\mu$m, which is larger than that in Example 10, in which the particle size of the filler particles is 0.2 $\mu$m, a phenomenon as described with reference to Fig. 3B is suppressed, and Charpy impact strength is estimated to be higher as compared with that in Example 10.

«Examples 16 to 20 and Comparative Example 4>>

Regarding materials used in the examples (including Comparative Example), materials other than the materials shown in Tables 1 to 4 are as shown in Table 7. In addition, a fiber diameter and a fiber length of a filler (glass fiber) shown in Table 7 are catalog values of the product.

[Table 7]

| | | Compound | Product name | Fiber Diameter [$\mu$m] | Fiber Length [mm] |
|---|---|---|---|---|---|
| (B) Filler Particles | B-7 | Glass fiber | Nitto Boseki Co., Ltd. "CSF-3PE-941HS" | 13 | 3 |
| (B) Filler Particles | B-8 | Glass fiber | Nitto Boseki Co., Ltd. "CSF-6PE-941HS" | 13 | 6 |
| (B) Filler Particles | B-9 | Glass fiber | Nitto Boseki Co., Ltd. "SS 10-420" | 10 | 0.3 |
| (C) Surface Treatment Agent | C-4 | N-2-(Aminoethyl)-3-aminopropyl trimethoxysilane | Shin-Etsu Chemical Co., Ltd. "KBM-603" | - | - |
| (E) Additive Agent | E-1 | Phosphinic acid metal salt (flame retardant) | Clariant "EXOLIT OP1230" | 30 | - |

Pellet manufacturing and molding in Examples 16 to 20 and Comparative Example 4 are similar to those in Examples 1 to 15 except for a difference in component.

In Examples 16 to 19, the matrix material A-1, glass fibers of filler particles B-7 to B-9, and the elastomer material D-1 were supplied in such a manner that a predetermined weight percentage is to be obtained in a weight feeder. In addition, before the supply, using the surface treatment agent C-1, treatment was performed on the glass fibers of the filler particles B-7 to B-9 by a method similar to the above-described surface treatment method.

In Example 20, the matrix material A-1, the glass fiber of the filler particle B-7, an elastomer material D-10, and an additive agent (flame retardant) E-1 were supplied in such a manner that a predetermined weight percentage is to be obtained in a weight feeder. In addition, before the supply, using the surface treatment agent C-4, treatment was performed on the glass fiber of the filler particle B-7 by a method similar to the above-described surface treatment method. Further, before the supply, using the surface treatment agent C-1, treatment was performed on the particles of the additive agent (flame retardant) E-1 by a method similar to the above-described surface treatment method.

In Comparative Example 4, the matrix material A-1, the glass fiber of the filler particle B-7, and an elastomer material D-9 were supplied in such a manner that a predetermined weight percentage is to be obtained in a weight feeder. In addition, before the supply, using the surface treatment agent C-1, treatment was performed on the glass fiber of the filler particle B-7 by a method similar to the above-described surface treatment method.

<Measurement of Aspect Ratio>

The central portion of the molded strip-shaped test piece was cut out, thermally-treated for ten hours at nitrogen atmosphere of 450°C, and components other than the filler particles were removed. After that, observation is performed using a scanning electron microscope (SEM) under the following condition, and a SEM image of the cross-section is acquired. In addition, in accordance with the length of the filler particles, in a case where an observation magnification length is 5 $\mu$m or less, observation was performed at 10,000x magnification, and in a case where the length exceeds 5 $\mu$m, observation was performed at 1,000x magnification. Furthermore, in a case where the length of the filler particles exceeds 100 $\mu$m, the SEM image is divided into a plurality of SEM images, and an SIM image of the entire filler particle was acquired. From the acquired SEM image, an average value of aspect ratios in an arbitrary range of the SEM image that is to be obtained by binarization and image analysis under the following condition was set as an aspect ratio of the filler particle. In addition, in the binarization and the image analysis of the SEM image, ImageJ (can be acquired from https://imagej.nih.gov/ij/), image processing software of the U.S. National Institutes of Health (NIH), can be used.

[Condition]

{Apparatus Name}
Schottky Field Emission Scanning Electron Microscope JSM-F100 (manufactured by JEOL Ltd.)
{Acceleration Voltage}
3 kV
{Magnification}
10,000x or 1,000x
{Measurement Range}
12.8 $\mu$m $\times$ 9.6 $\mu$m (10,000x) or 128 $\mu$m $\times$ 96 $\mu$m (1,000x)
{Number of Evaluated Areas}
10 areas/sample
{Binarization and Image Analysis}
ImageJ
{Binarization Method}
MaxEntropy (A threshold value is appropriately modified in such a manner that only filler particles can be separated by binarization. In a case where binarization cannot be executed by image processing software, an image in which only filler particles are filled by visual check using painting software or the like is additionally prepared).
{Aspect Ratio Calculation Method}
An average value is calculated by setting a maximal diameter of filler particles measured in such a manner as to pass through the centroid of the filler particles, as a filler particle length, a diameter measured in such a manner as to pass through the centroid of the filler particles, in a direction orthogonal to the maximal diameter, as a filler particle diameter, and a value obtained by dividing the filler particle length by the filler particle diameter, as an aspect ratio of each filler particle.

Table 8 shows results of Examples 16 to 20 and Comparative Example 4.

[Table 8]

| | | | Example | | | | | Comparative Example |
|---|---|---|---|---|---|---|---|---|
| No. | | | 16 | 17 | 18 | 19 | 20 | 4 |
| Composition | Matrix Material | | A-1 | A-1 | A-1 | A-1 | A-1 | A-1 |
| | Filler Particles | | B-7 | B-7 | B-8 | B-9 | B-7 | B-7 |
| | Surface Treatment Agent for Filler Particles | | C-1 | C-1 | C-1 | C-1 | C-4 | C-1 |
| | Flame Retardant | | - | - | - | - | E-1 | - |
| | Surface Treatment Agent for Flame Retardant | | - | - | - | - | C-1 | - |
| | Elastomer Material | | D-1 | D-1 | D-1 | D-1 | D-10 | D-9 |
| Composition Ratio | Matrix Material | wt% | 70 | 75 | 75 | 75 | 70 | 70 |
| | Filler Particles | wt% | 5 | 20 | 20 | 20 | 10 | 5 |
| | Flame Retardant | wt% | - | - | - | - | 10 | - |
| | Elastomer Material | wt% | 25 | 5 | 5 | 5 | 10 | 25 |
| ΔHSP Value | ΔHSP Value 1 Filler/Elastomer | MPa$^{1/2}$ | 7.6 | 7.6 | 7.6 | 7.6 | 9.3 | 7.6 |
| | ΔHSP Value 2 Matrix/Elastomer | MPa$^{1/2}$ | 7.1 | 7.1 | 7.1 | 7.1 | 5.4 | 5.4 |
| | ΔHSP Value 3 Matrix/Filler | MPa$^{1/2}$ | 11.1 | 11.1 | 11.1 | 11.1 | 14.4 | 11.1 |

| | | | | | | | | |
|---|---|---|---|---|---|---|---|---|
| | ΔHSP Value 4 Flame Retardant/Elastomer | MPa$^{1/2}$ | - | - | - | - | 6.3 | - |
| Characteristic | ΔHSP Value 5 Matrix/Flame Retardant | MPa$^{1/2}$ | - | - | - | - | 11.1 | |
| | Dispersion Structure | - | Independent dispersion | Independent dispersion | Independent dispersion | Independent dispersion | Independent dispersion | Attached dispersion |
| | Percentage of Independently Dispersed Filler Particles | Number % | 87 | 88 | 88 | 87 | 81 | 7 |
| | Elastomer Material Shore A Hardness | Degree | A95 | A95 | A95 | A95 | A67 | A84 |
| Shape | Filler Particle Fiber Length | [μm] | 364 | 455 | 1118 | 73 | 416 | 494 |
| | Aspect Ratio | - | 28 | 35 | 86 | 7.3 | 32 | 38 |
| Physical Property | Charpy Impact Value | kJ/m$^2$ | 4.8 | 7.8 | 9.1 | 3.6 | 6.8 | 5.2 |
| | | Rating | B | A | A | B | A | A |
| | Flexural Modulus | MPa | 4300 | 7200 | 7800 | 6200 | 2430 | 1580 |
| | | Rating | A | A | A | A | B | C |

In Table 8, the ΔHSP value of the flame retardant and the elastomer material is shown as "ΔHSP value 4", and the ΔHSP value of the matrix material and the flame retardant is shown as "ΔHSP value 5".

By the kneading of the resin composition, the glass fiber is cut, and the length of the fiber as the filler particle 2 in the resin composition becomes shorter than a value shown in Table 7. Table 8 shows a fiber length and an aspect ratio of a glass fiber serving as a filler particle in the resin compositions according to Examples 16 to 20 and Comparative Example 4. In addition, a fiber diameter of the glass fiber serving as the filler particle does not have a change before and after kneading, and remains the fiber diameter described in Table 7.

The resin compositions according to Examples 16 to 20 have an independent dispersion structure as the dispersion structure of the filler particles and the elastomer particles, and exhibit excellent flexural moduli as compared with that of the single matrix material A-1 that is shown in Table 1. In contrast to this, the resin composition according to Comparative Example 4 has the attached dispersion structure as illustrated in Fig. 2C, as the dispersion structure of the filler particles and the elastomer particles, and in Comparative Example 4, the flexural modulus declines from that of each example. In the resin composition according to Example 20, as illustrated in Fig. 2B, flame retardant particles corresponding to the additive agent particles 8 are dispersed in the elastomer particles, the additive agent particles 8 and the elastomer particles have the core-shell structure, and excellent flame resistance can be obtained.

The present disclosure is not limited to the above-described embodiment and Examples, and many modifications can be made within the technical idea of the present disclosure. Further, effects described in the embodiment and Examples of the present disclosure merely indicate the most desirable effect generated from the present disclosure, and the effect to be obtained by the present disclosure is not limited to those described in the embodiment and Examples.

Further, a new matter can be added to at least one embodiment. In addition, the disclosure in this specification includes not only the matter explicitly described in this specification, but also all matters that can be recognized from this specification and the drawings accompanying this specification.

In addition, regarding a specific numerical range exemplified in this specification, the wording "e to f" (e and f are numbers) means "e or more and/or f or less". Further, regarding the exemplified specific numerical range, in a case where a range from i to j and a range from m to n (i, j, m, and n are numbers) are described in combination, a set of a lower limit and an upper limit is not limited to a set of I and j, or a set of m and n. For example, a plurality of sets of lower limits and upper limits may be considered in combination. That is, in a case where the range from i to j and the range from m to n are described in combination, within the scope where no contradictions arise, consideration may be made within the range from i to n, and consideration may be made within the range from m to j. Further, being e or more means a state of being e or being larger than e (exceeding e), and a value larger than e may be employed without employing e. Further, being f or less means a state of being f or smaller than f (less than f), and a value smaller than f may be employed without employing f.

Further, the disclosure in this specification includes a complementary set of individual concepts described in this specification. That is, if the wording "A is B", for example, is described in this specification, even if the wording "A is not B" is omitted, it can be said that this specification discloses that "A is not B". This is because, in a case where the wording "A is B" is described, it is premised on the case where "A is not B". «Included Configuration>>

The disclosure of the present embodiment includes the following configurations.

(Configuration 1)

A resin composition comprising:

a matrix containing a polar polymer as a main component;
a plurality of filler particles containing an inorganic material as a main component, and having a particle size of 0.1 $\mu$m or more; and
a plurality of elastomer particles having a particle size of 0.1 $\mu$m or more,
wherein the plurality of filler particles and the plurality of elastomer particles are in contact with the matrix and disperse in the matrix,
wherein, in a certain cross-section of the resin composition, a first elastomer particle and a second elastomer particle of the plurality of elastomer particles exist at an interval of 10 $\mu$m or less,
wherein a first filler particle of the plurality of filler particles that exists closest to the first elastomer particle in the cross-section is separated from the first elastomer particle via the matrix, and
wherein a second filler particle of the plurality of filler particles that exists closest to the second elastomer particle in the cross-section is separated from the second elastomer particle via the matrix.

(Configuration 2)

The resin composition according to Configuration 1, wherein a distance between the first filler particle and the second filler particle is 100 $\mu$m or less, a distance between the first filler particle and the first elastomer particle is 10 $\mu$m or less, and a distance between the second filler particle and the second elastomer particle is 10 $\mu$m or less.

(Configuration 3)

The resin composition according to Configuration 1 or 2,
wherein the resin composition satisfies at least either of:

50 number % or more of the 10 or more filler particles in an area range of $10^2$ $\mu$m$^2$ or more and $1000^2$ $\mu$m$^2$ or less of the cross-section being separated from the plurality of elastomer particles via the matrix, and
50 number % or more of the 10 or more elastomer particles in an area range of $10^2$ $\mu$m$^2$ or more and $1000^2$ $\mu$m$^2$ or less of the cross-section being separated from the plurality of filler particles via the matrix.

(Configuration 4)

The resin composition according to any one of Configurations 1 to 3, wherein, regarding an occupancy rate in an area range of $10^2$ $\mu m^2$ or more and $1000^2$ $\mu m^2$ or less in the cross-section that includes the first elastomer particle, the second elastomer particle, the first filler particle, and the second filler particle, the matrix accounts for 30 area % or more and 90 area % or less, the plurality of filler particles accounts for 1 area % or more and 50 area % or less, and the plurality of elastomer particles accounts for 1 area % or more and 50 area % or less.

(Configuration 5)

The resin composition according to any one of Configurations 1 to 4, wherein, regarding a composition in a volume range of $100^3$ $\mu m^3$ or more and 1 $mm^3$ or less in the resin composition that includes the first elastomer particle, the second elastomer particle, the first filler particle, and the second filler particle, a composition of the matrix is 30 wt% or more and 90 wt% or less, a composition of the plurality of filler particles is 1 wt% or more and 50 wt% or less, and a composition of an elastomer material constituting the plurality of elastomer particles is 1 wt% or more and 50 wt% or less.

(Configuration 6)

The resin composition according to any one of Configurations 1 to 5, wherein an elastomer material constituting the plurality of elastomer particles includes a polar group.

(Configuration 7)

The resin composition according to any one of Configurations 1 to 6, wherein an elastomer material constituting the plurality of elastomer particles includes an ester bond.

(Configuration 8)

The resin composition according to any one of Configurations 1 to 7, wherein an elastomer material constituting the plurality of elastomer particles has a Shore A Hardness of 70 degrees or more.

(Configuration 9)

The resin composition according to any one of Configurations 1 to 8, wherein an elastomer material constituting the plurality of elastomer particles is a thermoplastic elastomer.

(Configuration 10)

The resin composition according to any one of Configurations 1 to 9, wherein an elastomer material constituting the plurality of elastomer particles is an acrylic-based elastomer or an ester-based elastomer.

(Configuration 11)

The resin composition according to any one of Configurations 1 to 10, wherein a melting point of an elastomer material constituting the plurality of elastomer particles is lower than a glass-transition point or a melting point of the matrix.

(Configuration 12)

The resin composition according to any one of Configurations 1 to 11, wherein a difference in Hansen solubility parameter value ($\Delta$HSP) of surfaces of the plurality of filler particles and an elastomer material constituting the plurality of elastomer particles is 7.0 $MPa^{1/2}$ or more.

(Configuration 13)

The resin composition according to any one of Configurations 1 to 12, wherein particle sizes of the first elastomer particle and the second elastomer particle are 10 $\mu m$ or less.

(Configuration 14)

The resin composition according to any one of Configurations 1 to 13, wherein particle sizes of the first elastomer particle and the second elastomer particle are 0.5 $\mu$m or more and 5 $\mu$m or less.

(Configuration 15)

The resin composition according to any one of Configurations 1 to 14, wherein particle sizes of the first filler particle and the second filler particle are 10 $\mu$m or less.

(Configuration 16)

The resin composition according to any one of Configurations 1 to 15, wherein particle sizes of the first filler particle and the second filler particle are 0.2 $\mu$m or more and 5 $\mu$m or less.

(Configuration 17)

The resin composition according to any one of Configurations 1 to 16, wherein a particle size of at least either of the first filler particle and the second filler particle is 2 $\mu$m or more.

(Configuration 18)

The resin composition according to any one of Configurations 1 to 17, wherein the first filler particle and the second filler particle contain silica or calcium carbonate.

(Configuration 19)

The resin composition according to any one of Configurations 1 to 18, wherein the first filler particle and the second filler particle have a fibrous shape.

(Configuration 20)

The resin composition according to any one of Configurations 1 to 19, wherein aspect ratios of the first filler particle and the second filler particle are 5 or more and 100 or less.

(Configuration 21)

The resin composition according to any one of Configurations 1 to 20, wherein the first filler particle and the second filler particle contain glass fiber or carbon fiber.

(Configuration 22)

The resin composition according to any one of Configurations 1 to 21, wherein a particle dispersed in the elastomer particle is contained.

(Configuration 23)

The resin composition according to Configuration 22, wherein the particle dispersed in the elastomer particle contains a phosphorus compound and/or a flame retardant.

(Configuration 24)

The resin composition according to any one of Configurations 1 to 23, wherein the plurality of filler particles has a surface layer formed by performing surface treatment on a base member made of the inorganic material.

(Configuration 25)

The resin composition according to Configuration 24, wherein the surface treatment is surface treatment to be performed using a silane coupling agent.

(Configuration 26)

The resin composition according to any one of Configurations 1 to 25, wherein the polar polymer is polyester.

(Configuration 27)

The resin composition according to any one of Configurations 1 to 26, wherein the polar polymer is polyethylene terephthalate.

(Configuration 28)

The resin composition according to any one of Configurations 1 to 27, wherein the polar polymer includes a carbodiimide group.

(Configuration 29)

The resin composition according to any one of Configurations 1 to 28, wherein at least one type of a metal material containing a transition metal element, a compound material containing a transition metal element, a metal material containing a typical metal element, and a compound material containing a typical metal element, which are types different from an inorganic material being a main component of the first filler particle, is contained.

(Configuration 30)

A manufacturing method of the resin composition according to any one of Configurations 1 to 29, the manufacturing method comprising:
melt kneading the matrix, the filler particle, and an elastomer material constituting the elastomer particles.

(Configuration 31)

A pellet comprising the resin composition according to any one of Configurations 1 to 29.

(Configuration 32)

A molded member comprising the resin composition according to any one of Configurations 1 to 29, wherein the polar polymer is a crystalline polymer.

(Configuration 33)

An injection-molded member comprising the resin composition according to any one of Configurations 1 to 29.

(Configuration 34)

A device comprising:

a member formed by molding the resin composition according to any one of Configurations 1 to 29; and
at least any of an electric component, a metal component, and an optical component.

(Configuration 35)

The device according to Configuration 34, wherein the member is an exterior member.
The present disclosure is not limited to the above embodiments and various changes and modifications can be made within the spirit and scope of the present disclosure. Therefore, to apprise the public of the scope of the present disclosure, the following claims are made.
This application claims priority from Japanese Patent Applications No. 2023-132069, filed August 14, 2023, No. 2023-177773, filed October 13, 2023, and No. 2024-130700, filed August 7, 2024 which are hereby incorporated by reference herein in their entirety.

Reference Sings list

1    matrix
2    filler particle
3    elastomer particle
4    elastomer material
5    craze
6    crack

**Claims**

1.  A resin composition comprising:

    a matrix containing a polar polymer as a main component;
    a plurality of filler particles containing an inorganic material as a main component, and having a particle size of 0.1 μm or more; and
    a plurality of elastomer particles having a particle size of 0.1 μm or more,
    wherein the plurality of filler particles and the plurality of elastomer particles are in contact with the matrix and disperse in the matrix,
    wherein, in a certain cross-section of the resin composition, a first elastomer particle and a second elastomer particle of the plurality of elastomer particles exist at an interval of 10 μm or less,
    wherein a first filler particle of the plurality of filler particles that exists closest to the first elastomer particle in the cross-section is separated from the first elastomer particle via the matrix, and
    wherein a second filler particle of the plurality of filler particles that exists closest to the second elastomer particle in the cross-section is separated from the second elastomer particle via the matrix.

2.  The resin composition according to Claim 1, wherein a distance between the first filler particle and the second filler particle is 100 μm or less, a distance between the first filler particle and the first elastomer particle is 10 μm or less, and a distance between the second filler particle and the second elastomer particle is 10 μm or less.

3.  The resin composition according to Claim 1,
    wherein the resin composition satisfies at least either of:

    50 number % or more of the 10 or more filler particles in an area range of $10^2$ μm$^2$ or more and $1000^2$ μm$^2$ or less of the cross-section being separated from the plurality of elastomer particles via the matrix, and
    50 number % or more of the 10 or more elastomer particles in an area range of $10^2$ μm$^2$ or more and $1000^2$ μm$^2$ or less of the cross-section being separated from the plurality of filler particles via the matrix.

4.  The resin composition according to Claim 1, wherein, regarding an occupancy rate in an area range of $10^2$ μm$^2$ or more and $1000^2$ μm$^2$ or less in the cross-section that includes the first elastomer particle, the second elastomer particle, the first filler particle, and the second filler particle, the matrix accounts for 30 area % or more and 90 area % or less, the plurality of filler particles accounts for 1 area % or more and 50 area % or less, and the plurality of elastomer particles accounts for 1 area % or more and 50 area % or less.

5.  The resin composition according to Claim 1, wherein, regarding a composition in a volume range of $100^3$ μm$^3$ or more and 1 mm$^3$ or less in the resin composition that includes the first elastomer particle, the second elastomer particle, the first filler particle, and the second filler particle, a composition of the matrix is 30 wt% or more and 90 wt% or less, a composition of the plurality of filler particles is 1 wt% or more and 50 wt% or less, and a composition of an elastomer material constituting the plurality of elastomer particles is 1 wt% or more and 50 wt% or less.

6.  The resin composition according to any one of Claims 1 to 5, wherein an elastomer material constituting the plurality of elastomer particles includes a polar group.

7.  The resin composition according to any one of Claims 1 to 5, wherein an elastomer material constituting the plurality of elastomer particles includes an ester bond.

8. The resin composition according to any one of Claims 1 to 5, wherein an elastomer material constituting the plurality of elastomer particles has a Shore A Hardness of 70 degrees or more.

9. The resin composition according to any one of Claims 1 to 5, wherein an elastomer material constituting the plurality of elastomer particles is a thermoplastic elastomer.

10. The resin composition according to any one of Claims 1 to 5, wherein an elastomer material constituting the plurality of elastomer particles is an acrylic-based elastomer or an ester-based elastomer.

11. The resin composition according to any one of Claims 1 to 5, wherein a melting point of an elastomer material constituting the plurality of elastomer particles is lower than a glass-transition point or a melting point of the matrix.

12. The resin composition according to any one of Claims 1 to 5, wherein a difference in Hansen solubility parameter value (ΔHSP) of surfaces of the plurality of filler particles and an elastomer material constituting the plurality of elastomer particles is 7.0 $MPa^{1/2}$ or more.

13. The resin composition according to any one of Claims 1 to 5, wherein particle sizes of the first elastomer particle and the second elastomer particle are 10 μm or less.

14. The resin composition according to any one of Claims 1 to 5, wherein particle sizes of the first elastomer particle and the second elastomer particle are 0.5 μm or more and 5 μm or less.

15. The resin composition according to any one of Claims 1 to 5, wherein particle sizes of the first filler particle and the second filler particle are 10 μm or less.

16. The resin composition according to any one of Claims 1 to 5, wherein particle sizes of the first filler particle and the second filler particle are 0.2 μm or more and 5 μm or less.

17. The resin composition according to any one of Claims 1 to 5, wherein a particle size of at least either of the first filler particle and the second filler particle is 2 μm or more.

18. The resin composition according to any one of Claims 1 to 5, wherein the first filler particle and the second filler particle contain silica or calcium carbonate.

19. The resin composition according to any one of Claims 1 to 5, wherein the first filler particle and the second filler particle have a fibrous shape.

20. The resin composition according to any one of Claims 1 to 5, wherein aspect ratios of the first filler particle and the second filler particle are 5 or more and 100 or less.

21. The resin composition according to any one of Claims 1 to 5, wherein the first filler particle and the second filler particle contain glass fiber or carbon fiber.

22. The resin composition according to any one of Claims 1 to 5, wherein a particle dispersed in the elastomer particle is contained.

23. The resin composition according to Claim 22, wherein the particle dispersed in the elastomer particle contains a phosphorus compound and/or a flame retardant.

24. The resin composition according to any one of Claims 1 to 5, wherein the plurality of filler particles has a surface layer formed by performing surface treatment on a base member made of the inorganic material.

25. The resin composition according to Claim 24, wherein the surface treatment is surface treatment to be performed using a silane coupling agent.

26. The resin composition according to any one of Claims 1 to 5, wherein the polar polymer is polyester.

27. The resin composition according to any one of Claims 1 to 5, wherein the polar polymer is polyethylene terephthalate.

28. The resin composition according to any one of Claims 1 to 5, wherein the polar polymer includes a carbodiimide group.

29. The resin composition according to any one of Claims 1 to 5, wherein at least one type of a metal material containing a transition metal element, a compound material containing a transition metal element, a metal material containing a typical metal element, and a compound material containing a typical metal element, which are types different from an inorganic material being a main component of the first filler particle, is contained.

30. A manufacturing method of the resin composition according to any one of Claims 1 to 5, the manufacturing method comprising:
    melt kneading the matrix, the filler particle, and an elastomer material constituting the elastomer particles.

31. A pellet comprising the resin composition according to any one of Claims 1 to 5.

32. A molded member comprising the resin composition according to any one of Claims 1 to 5,
    wherein the polar polymer is a crystalline polymer.

33. An injection-molded member comprising the resin composition according to any one of Claims 1 to 5.

34. A device comprising:

    a member formed by molding the resin composition according to any one of Claims 1 to 5; and
    at least any of an electric component, a metal component, and an optical component.

35. The device according to Claim 34, wherein the member is an exterior member.

**Amended claims under Art. 19.1 PCT**

1. A resin composition comprising:

    a matrix containing a polar polymer as a main component;
    a plurality of filler particles containing an inorganic material as a main component, and having a particle size of 0.1 $\mu$m or more; and
    a plurality of elastomer particles having a particle size of 0.1 $\mu$m or more,
    wherein the plurality of filler particles and the plurality of elastomer particles are in contact with the matrix and disperse in the matrix,
    wherein, in a certain cross-section of the resin composition, a first elastomer particle and a second elastomer particle of the plurality of elastomer particles exist at an interval of 10 $\mu$m or less,
    wherein a first filler particle of the plurality of filler particles that exists closest to the first elastomer particle in the cross-section is separated from the first elastomer particle via the matrix, and
    wherein a second filler particle of the plurality of filler particles that exists closest to the second elastomer particle in the cross-section is separated from the second elastomer particle via the matrix.

2. (Currently Amended) The resin composition according to Claim 1, wherein the matrix is a thermoplastic resin.

3. The resin composition according to Claim 1,
   wherein the resin composition satisfies at least either of:

    50 number % or more of the 10 or more filler particles in an area range of $10^2$ $\mu$m$^2$ or more and $1000^2$ $\mu$m$^2$ or less of the cross-section being separated from the plurality of elastomer particles via the matrix, and
    50 number % or more of the 10 or more elastomer particles in an area range of $10^2$ $\mu$m$^2$ or more and $1000^2$ $\mu$m$^2$ or less of the cross-section being separated from the plurality of filler particles via the matrix.

4. The resin composition according to Claim 1, wherein, regarding an occupancy rate in an area range of $10^2$ $\mu$m$^2$ or more and $1000^2$ $\mu$m$^2$ or less in the cross-section that includes the first elastomer particle, the second elastomer particle, the first filler particle, and the second filler particle, the matrix accounts for 30 area % or more and 90 area % or less, the plurality of filler particles accounts for 1 area % or more and 50 area % or less, and the plurality of elastomer particles accounts for 1 area % or more and 50 area % or less.

5. The resin composition according to Claim 1, wherein, regarding a composition in a volume range of $100^3$ $\mu m^3$ or more and 1 mm$^3$ or less in the resin composition that includes the first elastomer particle, the second elastomer particle, the first filler particle, and the second filler particle, a composition of the matrix is 30 wt% or more and 90 wt% or less, a composition of the plurality of filler particles is 1 wt% or more and 50 wt% or less, and a composition of an elastomer material constituting the plurality of elastomer particles is 1 wt% or more and 50 wt% or less.

6. The resin composition according to any one of Claims 1 to 5, wherein an elastomer material constituting the plurality of elastomer particles includes a polar group.

7. The resin composition according to any one of Claims 1 to 5, wherein an elastomer material constituting the plurality of elastomer particles includes an ester bond.

8. The resin composition according to any one of Claims 1 to 5, wherein an elastomer material constituting the plurality of elastomer particles has a Shore A Hardness of 70 degrees or more.

9. The resin composition according to any one of Claims 1 to 5, wherein an elastomer material constituting the plurality of elastomer particles is a thermoplastic elastomer.

10. The resin composition according to any one of Claims 1 to 5, wherein an elastomer material constituting the plurality of elastomer particles is an acrylic-based elastomer or an ester-based elastomer.

11. The resin composition according to any one of Claims 1 to 5, wherein a melting point of an elastomer material constituting the plurality of elastomer particles is lower than a glass-transition point or a melting point of the matrix.

12. The resin composition according to any one of Claims 1 to 5, wherein a difference in Hansen solubility parameter value (ΔHSP) of surfaces of the plurality of filler particles and an elastomer material constituting the plurality of elastomer particles is 7.0 MPa$^{1/2}$ or more.

13. The resin composition according to any one of Claims 1 to 5, wherein particle sizes of the first elastomer particle and the second elastomer particle are 10 $\mu m$ or less.

14. (Currently Amended) The resin composition according to any one of Claims 1 to 5, wherein the resin composition satisfies at least either of:

   a distance between the first filler particle and the second filler particle being 100 $\mu m$ or less, a distance between the first filler particle and the first elastomer particle being 10 $\mu m$ or less, and a distance between the second filler particle and the second elastomer particle being 10 $\mu m$ or less, and
   particle sizes of the first elastomer particle and the second elastomer particle being 0.5 $\mu m$ or more and 5 $\mu m$ or less.

15. The resin composition according to any one of Claims 1 to 5, wherein particle sizes of the first filler particle and the second filler particle are 10 $\mu m$ or less.

16. The resin composition according to any one of Claims 1 to 5, wherein particle sizes of the first filler particle and the second filler particle are 0.2 $\mu m$ or more and 5 $\mu m$ or less.

17. The resin composition according to any one of Claims 1 to 5, wherein a particle size of at least either of the first filler particle and the second filler particle is 2 $\mu m$ or more.

18. The resin composition according to any one of Claims 1 to 5, wherein the first filler particle and the second filler particle contain silica or calcium carbonate.

19. The resin composition according to any one of Claims 1 to 5, wherein the first filler particle and the second filler particle have a fibrous shape.

20. The resin composition according to any one of Claims 1 to 5, wherein aspect ratios of the first filler particle and the second filler particle are 5 or more and 100 or less.

21. The resin composition according to any one of Claims 1 to 5, wherein the first filler particle and the second filler particle contain glass fiber or carbon fiber.

22. The resin composition according to any one of Claims 1 to 5, wherein a particle dispersed in the elastomer particle is contained.

23. The resin composition according to Claim 22, wherein the particle dispersed in the elastomer particle contains a phosphorus compound and/or a flame retardant.

24. The resin composition according to any one of Claims 1 to 5, wherein the plurality of filler particles has a surface layer formed by performing surface treatment on a base member made of the inorganic material.

25. The resin composition according to Claim 24, wherein the surface treatment is surface treatment to be performed using a silane coupling agent.

26. The resin composition according to any one of Claims 1 to 5, wherein the polar polymer is polyester.

27. The resin composition according to any one of Claims 1 to 5, wherein the polar polymer is polyethylene terephthalate.

28. The resin composition according to any one of Claims 1 to 5, wherein the polar polymer includes a carbodiimide group.

29. The resin composition according to any one of Claims 1 to 5, wherein at least one type of a metal material containing a transition metal element, a compound material containing a transition metal element, a metal material containing a typical metal element, and a compound material containing a typical metal element, which are types different from an inorganic material being a main component of the first filler particle, is contained.

30. A manufacturing method of the resin composition according to any one of Claims 1 to 5, the manufacturing method comprising:
melt kneading the matrix, the filler particle, and an elastomer material constituting the elastomer particles.

31. A pellet comprising the resin composition according to any one of Claims 1 to 5.

32. A molded member comprising the resin composition according to any one of Claims 1 to 5,
wherein the polar polymer is a crystalline polymer.

33. An injection-molded member comprising the resin composition according to any one of Claims 1 to 5.

34. A device comprising:

a member formed by molding the resin composition according to any one of Claims 1 to 5; and
at least any of an electric component, a metal component, and an optical component.

35. The device according to Claim 34, wherein the member is an exterior member.

# FIG.1A

# FIG.1B

**FIG.2A**

10

3(3b)

2(2b)

2

1

2(2a)

3(3a)

**FIG.2B**

10

8

3

3(3b)

2(2b)

2

1

2(2a)

3(3a)

**FIG.2C**

30

1

4

2

# FIG.3A

# FIG.3B

# FIG.3C

# FIG.4

# FIG.5A

# FIG.5B

# FIG.6

# EP 4 763 923 A1

<table>
<tr><td colspan="2"><strong>INTERNATIONAL SEARCH REPORT</strong></td><td>International application No.<br><br><strong>PCT/JP2024/028690</strong></td></tr>
</table>

**A. CLASSIFICATION OF SUBJECT MATTER**

*C08L 101/00*(2006.01)i; *C08J 3/20*(2006.01)i; *C08K 3/013*(2018.01)i; *C08L 21/00*(2006.01)i; *C08L 101/02*(2006.01)i; *C08L 101/12*(2006.01)i

FI: C08L101/00; C08L101/12; C08K3/013; C08L21/00; C08J3/20 B CER; C08J3/20 CEZ; C08L101/02

According to International Patent Classification (IPC) or to both national classification and IPC

**B. FIELDS SEARCHED**

Minimum documentation searched (classification system followed by classification symbols)

C08L101/00; C08J3/20; C08K3/013; C08L21/00; C08L101/02; C08L101/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| X | JP 2011-1424 A (HITACHI INDUSTRIAL EQUIPMENT SYSTEMS CO., LTD.) 06 January 2011 (2011-01-06)<br>claims, paragraphs [0027], [0033], examples, fig. 6 | 1-2, 6, 13-14, 17-18, 32-35 |
| A | | 3-5, 7-12, 15-16, 19-31 |
| A | WO 2018/135648 A1 (TOYOTA BOSHOKU CORP.) 26 July 2018 (2018-07-26) | 1-35 |
| A | JP 4-202247 A (MITSUBISHI PETROCHEMICAL CO.) 23 July 1992 (1992-07-23) | 1-35 |
| A | JP 2006-257401 A (MITSUBISHI ENGINEERING PLASTICS CORP.) 28 September 2006 (2006-09-28) | 1-35 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **17 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/028690**

| Patent document cited in search report | | | Publication date (day/month/year) | Patent family member(s) | | | Publication date (day/month/year) |
|---|---|---|---|---|---|---|---|
| JP | 2011-1424 | A | 06 January 2011 | (Family: none) | | | |
| WO | 2018/135648 | A1 | 26 July 2018 | US | 2020/0216648 | A1 | |
| | | | | EP | 3572465 | A1 | |
| | | | | KR | 10-2019-0042735 | A | |
| | | | | CN | 109844024 | A | |
| JP | 4-202247 | A | 23 July 1992 | (Family: none) | | | |
| JP | 2006-257401 | A | 28 September 2006 | US | 2009/0143512 | A1 | |
| | | | | WO | 2006/087940 | A1 | |
| | | | | CN | 101120050 | A | |
| | | | | KR | 10-2007-0105981 | A | |
| | | | | TW | 200639215 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020193284 A
- JP 2023132069 A
- JP 2023177773 A
- JP 2024130700 A

**Non-patent literature cited in the description**

- Polymer Handbook, vol. VII, 698-711
- **WESLEY L. ARCHER**. Industrial Solvents Handbook.
- **CHARLES M. HANSEN**. *Hansen Solubility Parameter in Practice*, http://www.hansen-solubility.com
- HSPiP